Europäisches Patentamt

European Patent Office

Office européen des brevets

(19)

(11) **EP 0 860 963 B1**

(12) **FASCICULE DE BREVET EUROPEEN**

(45) Date de publication et mention
de la délivrance du brevet:
**11.01.2006 Bulletin 2006/02**

(51) Int Cl.:
*H04L 25/03* (2006.01)    *H04B 1/12* (2006.01)

(21) Numéro de dépôt: **98400358.2**

(22) Date de dépôt: **16.02.1998**

(54) **Procédé et dispositif d'égalisation autodidacte d'un canal de transmission de signaux à module sensiblement constant**

Verfahren und Einrichtung zur automatischen Entzerrung eines Übertragungskanals, das Signale von wesentlich konstantem Betrag trägt

Method and apparatus for the automatic equalisation of transmission channels, which carry signals of substantially constant modulus

(84) Etats contractants désignés:
**BE DE GB IT NL**

(30) Priorité: **20.02.1997 FR 9702015**

(43) Date de publication de la demande:
**26.08.1998 Bulletin 1998/35**

(73) Titulaire: **TELEDIFFUSION DE FRANCE**
**75015 Paris (FR)**

(72) Inventeurs:
• **Nussbaum, Dominique**
**68800 Vieux-Thann (FR)**
• **Collette, Jean-Luc**
**Technopole Metz,**
**57070 Metz (FR)**
• **Jahan, Bruno**
**57950 Montigny-Les-Metz (FR)**

(74) Mandataire: **Fréchède, Michel**
**Cabinet Plasseraud**
**65/67 rue de la Victoire**
**75440 Paris Cedex 09 (FR)**

(56) Documents cités:
**WO-A-94/29956**      **US-A- 4 789 994**

• **KIL NAM OH, YONG OHK CHIN: "New blind equalization techniques based on constant modulus algorithm" IEEE GLOBAL TELECOMMUNICATIONS CONFERENCE 1995, 14 - 16 novembre 1995, NEW YORK, US, pages 865-869, XP000622917**
• **HATZINAKOS: "Blind equalization using decision feedback prediction and tricepstrum principles" SIGNAL PROCESSING. EUROPEAN JOURNAL DEVOTED TO THE METHODS AND APPLICATIONS OF SIGNAL PROCESSING., vol. 36, no. 3, avril 1994, AMSTERDAM NL, pages 261-276, XP000435667**
• **SHYNK, CHAN: "Performance surfaces of the constant modulus algorithm based on a conditional Gaussian model" IEEE TRANSACTIONS ON SIGNAL PROCESSING., vol. 41, no. 5, 1 mai 1993, NEW YORK, US, pages 1965-1969, XP000368388**
• **WHITE: "Blind equalization of constant modulus signals using an adaptive observer approach" IEEE TRANSACTIONS ON COMMUNICATIONS., vol. 44, no. 2, février 1996, NEW YORK US, pages 134-136, XP000554662**
• **GOLDBERG, ILTIS: "Joint channel equalization and interference rejection using a modified constant modulus algorithm" 1988 IEEE MILITARY COMMUNICATIONS CONFERENCE, 23 - 26 octobre 1988, NEW YORK, US, pages 97-101, XP000014822**

EP 0 860 963 B1

## Description

L'invention concerne un procédé et un dispositif d'égalisation autodidacte d'un canal de transmission de signaux radioélectriques à module sensiblement constant.

Lors de la transmission d'un signal radioélectrique, tel qu'un signal FM, la propagation de ce signal en milieu naturel, site montagneux ou urbain comportant de nombreux bâtiments, est rendue très complexe, le signal transmis subissant un nombre important de perturbations et de réflexions. Pour cette raison, le signal reçu par un récepteur en un lieu donné est constitué d'une somme de signaux décalés dans le temps et déphasés entre eux. Ce phénomène peut être modélisé par une fonction de transfert, fonction de transfert du canal de transmission réel, vérifiant la relation (1) :

$$C(z) = \sum_{k=0}^{\infty} r_k \cdot z^{-\tau k}$$

dans laquelle $r_k$ et $\tau_k$ désignent l'amplitude complexe et le retard du k ième écho en nombre d'échantillons respectivement.

Ce phénomène de trajets multiples est particulièrement gênant pour les signaux FM pour lesquels il engendre des distorsions non linéaires après démodulation, ce qui dégrade fortement la qualité du signal audiofréquence restitué. En outre, dans le cas de transmission de signaux numériques, le phénomène de propagation par trajets multiples est l'une des causes principales de l'Interférence Entre Symboles, phénomène désigné par IES.

Afin d'améliorer les conditions de réception de tels signaux, on a, jusqu'à ce jour, proposé de compenser les effets indésirables du canal de transmission, une telle opération étant usuellement désignée dans le domaine technique correspondant par "égalisation". Dans ce but, plusieurs approches ont été envisagées.

Dans le cas de la transmission de signaux numériques, une première approche consiste à utiliser principalement des techniques d'égalisation nécessitant l'insertion périodique de séquences de signaux de référence, ce qui se traduit par une diminution du débit utile du signal reçu.

Une deuxième approche consiste, au contraire, à égaliser le canal de transmission sans faire appel à ces signaux de référence, en utilisant uniquement des propriétés statistiques du signal numérique d'origine. Cette deuxième approche est plus communément désignée par égalisation autodidacte, ou aveugle. Les processus d'égalisation autodidacte les plus utilisés mettent en oeuvre des algorithmes de BUSSGANG ou des moindres carrés moyens, désignés par LMS pour *Least Mean Squares* en langage anglo-saxon.

Les dispositifs d'égalisation tels que représentés en figure la, mettant en oeuvre les algorithmes ou méthodes précités, sont constitués d'un filtre linéaire transverse, dont les coefficients sont mis à jour de manière itérative, à l'aide d'un algorithme du gradient stochastique par exemple. Un tel algorithme est auto-adaptatif car, pour engendrer le signal d'erreur e(n) pilotant le filtrage linéaire transverse H(n), une séquence de référence n'est pas nécessaire, le signal d'erreur e(n) étant engendré à partir d'une transformation non linéaire g(zn) du signal transmis égalisé.

Dans le cas de la radiodiffusion FM, le signal transmis est un signal analogique à bande étroite, et il n'est donc pas bien adapté aux dispositifs d'égalisation précités.

Toutefois, la mise en oeuvre d'un processus d'égalisation peut être envisagée en raison du fait que, dans la technique de la modulation de fréquence, l'amplitude de l'onde porteuse modulée est maintenue constante ou sensiblement constante.

Les algorithmes ou processus qui utilisent cette propriété sont désignés par algorithmes CMA, pour *Constant Modulus Algorithms,* et font partie de la famille des algorithmes ou méthode de BUSSGANG. Dans ce cas, la fonction non linéaire g(zn) permettant d'engendrer le signal d'erreur e(n) peut être de la forme :

$$g(zn) = zn/|zn|.$$

Il existe de nombreuses variantes d'algorithmes ou méthodes issues de l'algorithme CMA, ces variantes réalisant, en fait, divers compromis entre complexité calculatoire et vitesse de convergence. Parmi ces variantes, on peut par exemple citer :

- le *"Normalized CMA"* ;
- le *"Frequency Domain CMA"* ;
- le *"Normalized Sliding Window CMA"* ;
- le "*Fast Quasi Newton Window CMA".*

Parmi ceux-ci on peut citer les articles :

- "Performance surfaces on the constant modules algorithum based on an conditional gaussian model" publié par SHYNK, CHAN, IEEE TRANSACTIONS ON SIGNAL PROCESSING, vol. 41, n° 5, 1er mai 1993 (1993-05-01), pages 1965-1969, XP000368388 NEW YORK, USA.

Ce document décrit différentes versions d'un processus de filtrage CMA.

- "Joint channel equalization and interference rejection using a modified constant modulus algorithm", publié par GOLDBERG, ILTIS 1988, IEEE MILITARY COMMUNICATIONS CONFERENCE, 23 octobre 1988 (1988-10-23), 26 October 1988 (1988-10-26) pages 97-101, XP 000014822 NEW YORK, USA.

Ce document concerne un procédé de filtrage combinant un processus CMA et un processus des moindres carrés récursif pour former la fonction coût.

- "New blind equalization techniques based on constant modulus algorithm" publié par KIL NAM OH, YONG OHK CHIN, IEEE GLOBAL TELECOMMUNICATIONS CONFERENCE 1995, 14 novembre 1995 (1995-11-14), 16 novembre 1995 (1995-11-16) pages 865-869, XP00022917 NEW YORK, USA.

Concernant le même domaine technique, ce document décrit la mise en oeuvre d'un filtrage adaptatif et d'un filtrage avant pilotés par un même signal d'erreur. Le traitement non linéaire est obtenu grâce à un circuit à seuil.
Tous les algorithmes ou variantes d'algorithmes précités sont susceptibles de permettre l'égalisation d'un canal de transmission de signaux à module constant. Toutefois, basés sur le même principe, ils en présentent tous le même inconvénient. En effet, les algorithmes ou processus CMA et, plus généralement, les algorithmes de BUSSGANG mettent tous en oeuvre un filtre linéaire transverse, tel que représenté en figure la. Ce filtre linéaire H(z) a en fait pour objet d'inverser la fonction de transfert du canal de transmission C(z) a une constante multiplicative b et à un décalage temporel d près selon la relation (2) :

$$C(z).H(z) = b.z^{-d}.$$

Pour le cas, simplifié, d'un canal de transmission à deux trajets, trajet direct et une réflexion, décalés dans le temps d'un échantillon, la fonction de transfert d'un tel canal de transmission s'écrit, relation (3) :

$$C(z) = 1 + az^{-1}.$$

où a est un nombre complexe, z désignant la transformée en z dans l'espace fréquentiel.
Si |a| < 1 le canal est dit à phase minimale ou à minimum de phase.
Si |a| > 1 le canal est dit à phase maximale ou à maximum de phase.
Tout dispositif d'égalisation mettant en oeuvre un processus ou algorithme de BUSSGANG a pour objet de définir, pour chaque échantillon ou bloc d'échantillons, un filtre linéaire H(z) vérifiant la relation (4) :

$$1/C(z) = 1 - az^{-1} + a^2z^{-2} - a^3z^{-3} + \ldots\ldots$$
$$= \sum_{i=0}^{N-1}(-az^{-1})^i + \sum_{i=N}^{\infty}(-az^{-1})^i$$

où |a| < 1, N désignant par exemple le nombre de coefficients non fixé a priori du filtre transversal. Pour une valeur de a fixée, il est possible de réaliser une approximation de la valeur : $\dfrac{b.z^{-d}}{C(z)}$ avec une précision aussi grande que désirée.

En pratique, pour un nombre N de coefficients fixé a priori, plus la valeur de a annulant la fonction de transfert C(z) du canal de transmission se rapproche du cercle unité, moins l'approximation réalisée avec un nombre fixe de coefficients est précise.

Un raisonnement identique peut être fait avec un canal à phase maximale, pour lequel |a| > 1.

En fait, tout canal de transmission peut être considéré comme un canal de transmission mixte, c'est-à-dire comme comportant des parties à maximum de phase et à minimum de phase.

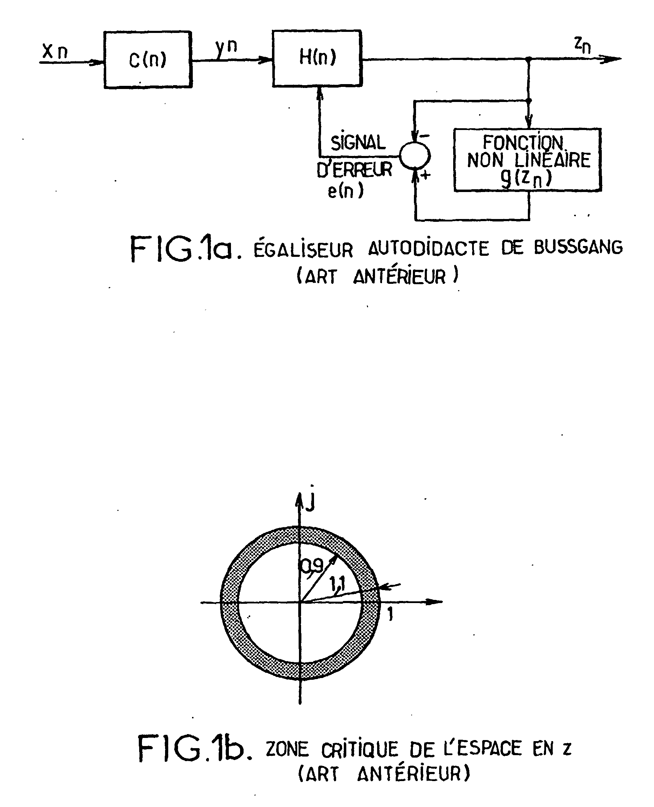

Il apparaît donc, ainsi que représenté en figure 1b, une zone critique dans l'espace de représentation des coefficients, à l'intérieur de laquelle le dispositif d'égalisation de BUSSGANG s'avère inefficace. On admet généralement que cette zone se situe autour de 0,9 < |a| < 1,1 ainsi que représenté sur la figure 1b précitée.

La réduction de cette zone critique, sans toutefois en permettre l'élimination totale, peut être envisagée en augmentant de manière importante le nombre de coefficients. Une telle augmentation présente toutefois l'inconvénient d'une augmentation de la complexité calculatoire et d'une diminution de la vitesse de convergence du filtre.

Enfin, selon d'autres approches, des structures de dispositifs d'égalisation autodidacte différentes, autres que celle incorporant un filtre linéaire transverse classique, ont été proposées. Ces structures sont en général constituées d'un filtre avant transverse, d'un filtre arrière purement récursif et d'un contrôle automatique de gain.

Cette dernière approche a permis l'égalisation de canaux de transmission plus sévères, c'est-à-dire de se rapprocher du cercle unité, sans toutefois atteindre celui-ci. En effet, un tel dispositif utilise toujours le filtrage linéaire, la non-linéarité étant limitée à la fonction coût.

Les méthodes ou processus proposés jusqu'à ce jour sont donc inefficaces pour les canaux de transmission ayant des valeurs en z d'annulation de la fonction de transfert de ces derniers proches du cercle unité. Ce type de canal de transmission se rencontre cependant fréquemment dans la réalité, en particulier dans les canaux de transmission de radiotéléphonie mobile à évanouissements profonds, autrement dit dans les milieux urbains, suburbains et montagneux.

La présente invention a pour objet de remédier aux inconvénients et limitations des méthodes, processus, procédés et dispositifs d'égalisation autodidacte de l'art antérieur, notamment pour la transmission de signaux à module constant.

Un autre objet de la présente invention est la mise en oeuvre d'un dispositif d'égalisation autodidacte d'un canal de transmission de signaux à module constant, notamment radioélectriques, dans lequel un signal à module constant est reconstitué, à partir du signal d'origine transmis, en l'absence totale ou partielle d'égalisation par compensation de la fonction de transfert du canal de transmission.

Un autre objet de la présente invention est la mise en oeuvre d'un procédé et d'un dispositif d'égalisation autodidacte d'un canal de transmission de signaux à module constant, plus particulièrement destinés à des canaux de transmission très sévères, dans lesquels un nombre important, voire non quantifiable, de réflexions et de trajets de propagation multiples du signal d'origine doivent être supprimés ou égalisés.

Un autre objet de la présente invention est la mise en oeuvre d'un procédé et d'un dispositif d'égalisation autodidacte d'un canal de transmission de signaux à module constant, plus particulièrement destinés à des canaux de transmission générateurs d'échos multiples, d'amplitude élevée sensiblement voisine, tels que notamment le canal de transmission de radiotéléphonie mobile en milieu urbain ou suburbain.

Le procédé et le dispositif d'égalisation autodidacte de signaux à module sensiblement constant représentatifs d'un signal source et transmis par un canal de transmission générateur de signaux d'échos, objets de la présente invention, sont remarquables en ce qu'ils consistent à, et permettent de, en vue d'engendrer un signal utile à module sensiblement constant :

- transformer les signaux à module constant transmis en un signal numérique complexe ;
- estimer, pour chaque échantillon de période courante, l'ensemble des signaux d'écho en un signal d'écho estimé, par estimation sur au moins la période d'échantillonnage courante au moyen d'un filtrage adaptatif appliqué au signal utile à module sensiblement constant ;
- corriger le signal numérique complexe en un signal numérique complexe corrigé, par soustraction au signal numérique complexe du signal d'écho estimé ;
- soumettre le signal numérique complexe corrigé à un filtrage non linéaire pour engendrer le signal utile à module sensiblement constant, le filtrage adaptatif appliqué étant réalisé en fonction de l'erreur entre le signal numérique corrigé et le signal utile à module sensiblement constant.

Le procédé et le dispositif d'égalisation autodidacte de signaux à module sensiblement constant, objets de la présente invention, trouvent application à l'égalisation autodidacte de canaux de transmission de signaux, tant analogiques que numériques, en particulier aux canaux de transmission des signaux radioélectriques à module constant ou sensiblement constant de la radio ou de la télévision en FM, aux signaux numériques transmis sur canal hertzien avec une enveloppe sensiblement constante, ainsi qu'aux canaux de transmission de signaux sonores ou ultrasonores à module constant, après transformation des signaux transmis reçus en signaux électriques.

Le procédé et le dispositif d'égalisation autodidacte d'un canal de transmission de signaux à module constant, objets de la présente invention, seront décrits de manière plus détaillée ci-après, en liaison avec les dessins dans lesquels, outre les figures 1a et 1b relatives à l'art antérieur :

- la figure 2a représente, sous forme d'organigramme général, un schéma illustratif de mise en oeuvre du procédé d'égalisation autodidacte d'un canal de transmission de signaux à module constant, conforme à l'objet de la présente invention ;
- la figure 2b représente un détail de réalisation de la figure 2a ;
- la figure 3a représente une première variante avantageuse de mise en oeuvre du procédé, objet de la présente invention, dans laquelle un processus d'égalisation par rétroprédiction des échos à maximum de phase est introduit ;
- la figure 3b représente un détail de réalisation de mise en oeuvre du procédé objet de l'invention, tel que représenté en figure 3a ;
- la figure 4 représente une deuxième variante avantageuse de mise en oeuvre du procédé objet de la présente invention, dans laquelle un processus de filtrage avant du signal numérique complexe corrigé est introduit, ce processus de filtrage avant étant sensiblement analogue à un processus de rétroprédiction accompagné d'un contrôle automatique de gain ;
- la figure 5a représente, sous forme de schéma bloc fonctionnel, un dispositif d'égalisation autodidacte du canal de transmission de signaux à module constant, selon le procédé objet de l'invention dans sa forme générale telle que représentée en figures 2a et 2b ;
- la figure 5b représente, sous forme de schéma bloc, les éléments essentiels d'un récepteur FM muni d'un dispositif d'égalisation autodidacte tel que représenté en figure 5a ;
- la figure 6a représente, à titre d'exemple non limitatif, le schéma fonctionnel d'un dispositif d'égalisation autodidacte, objet de la présente invention, permettant la mise en oeuvre du procédé selon l'invention, selon la première variante de mise en oeuvre de celui-ci, tel qu'illustré en figures 3a et 3b ;
- la figure 6b représente une variante non limitative de réalisation du dispositif d'égalisation représenté en figure 6a ;
- la figure 6c représente une autre variante non limitative de réalisation du dispositif d'égalisation représenté en figure 6a ;
- la figure 7a représente un dispositif de l'art antérieur permettant la mise en oeuvre d'un processus d'égalisation autodidacte par filtrage avant ;
- la figure 7b représente, à titre d'exemple non limitatif, le schéma fonctionnel d'un dispositif d'égalisation autodidacte, objet de la présente invention, permettant la mise en oeuvre du procédé selon l'invention, selon la deuxième variante de mise en oeuvre de celui-ci, tel qu'illustré en figure 4 ;
- la figure 7c représente, de manière plus détaillée, le dispositif d'égalisation autodidacte objet de la présente invention, tel que représenté en figure 7b.

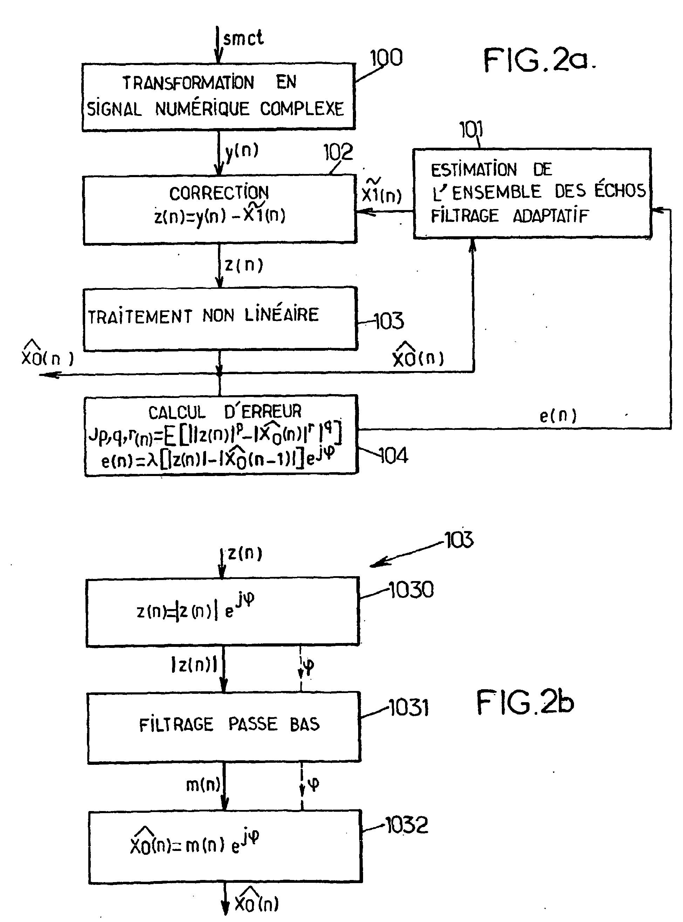

Une description plus détaillée du procédé d'égalisation autodidacte du canal de transmission de signaux à module sensiblement constant, objet de la présente invention, ces signaux étant représentatifs d'un signal source et transmis par un canal de transmission générateur de signaux d'échos, sera maintenant donnée en liaison avec les figures 2a et 2b.

Ainsi qu'on l'a représenté sur la figure 2a précitée, le procédé objet de la présente invention consiste au moins, dans le but d'engendrer un signal utile à module sensiblement constant, à transformer les signaux à module constant transmis, ces signaux étant notés smct sur la figure précitée, en un signal numérique complexe, en une étape 100. On rappelle à titre d'exemple non limitatif, que les signaux à module constant transmis smct étant reçus sous forme analogique par exemple, l'étape 100 précitée implique en fait une conversion analogique-numérique suivie d'une étape de transformation en signal numérique complexe, permettant de délivrer le signal numérique complexe, noté $y(n)$ où $n$ désigne le rang de l'échantillon courant obtenu par échantillonnage des signaux à module constant transmis smct. On indique que le signal numérique complexe $y(n)$ comporte par définition une partie réelle et une partie imaginaire, c'est-à-dire en définitive une valeur d'amplitude et une valeur d'argument de phase correspondantes, ainsi qu'il sera décrit ultérieurement dans la description.

L'étape de transformation 100 précitée est suivie d'une étape 101 consistant à estimer, pour chaque échantillon de période courante, c'est-à-dire de rang $n$, l'ensemble des signaux d'écho en un signal d'écho estimé, noté $X_1(n)$, cette étape 101 consistant en une estimation, sur au moins la période d'échantillonnage précédant la période d'échantillonnage courante, au moyen d'un filtrage adaptatif appliqué au signal utile à module sensiblement constant $X_0(n)$. On comprend ainsi que l'estimation précitée de l'ensemble des échos, pour constituer le signal d'écho estimé $X_1(n)$, peut être effectuée sur une ou plusieurs périodes d'échantillonnage précédant la période d'échantillonnage courante, c'est-à-dire à partir des échantillons $X_0(n-1)$ à $X_0(n-p)$ du signal utile à module sensiblement constant antérieurs à l'échantillon de période courante de ce même signal utile à module sensiblement constant, noté $X_0(n)$ pour la période courante.

Ainsi que représenté sur la figure 2a précitée, le signal d'écho estimé $X_1(n)$ étant disponible suite à la mise en oeuvre de l'étape 101, le procédé objet de la présente invention consiste ensuite, ainsi que représenté en figure 2a, à corriger le signal numérique complexe y(n) en une étape 102 de correction, pour engendrer un signal numérique complexe corrigé, noté z(n), le signal numérique complexe corrigé précité étant obtenu par soustraction au signal numérique complexe du signal d'écho estimé $X_1(n)$.

L'étape de correction 102 précitée est elle-même suivie d'une étape référencée 103 sur la figure 2a, consistant à soumettre le signal numérique complexe corrigé z(n) à un traitement non linéaire pour engendrer le signal utile à module sensiblement constant, c'est-à-dire l'échantillon $X_0(n)$ pour la période d'échantillonnage courante. Bien entendu, le signal utile à module sensiblement constant précité, pour la période d'échantillonnage courante $X_0(n)$ est alors disponible comme signal utile à module sensiblement constant, ce signal étant en outre utilisé à l'étape 101 pour la période d'échantillonnage suivante au cours d'un processus itératif.

L'étape 103 de traitement non linéaire, à l'issue de laquelle le signal utile à module sensiblement constant $X_0(n)$ est disponible, est suivie d'une étape 104 de calcul d'erreur entre le signal numérique complexe corrigé et le signal utile à module sensiblement constant, cette erreur étant notée e(n) pour l'échantillon courant de rang n du signal utile à module sensiblement constant.

Le filtrage adaptatif mis en oeuvre à l'étape 101 d'estimation de l'ensemble des échos est, conformément à un aspect particulièrement remarquable du procédé objet de la présente invention, mis en oeuvre en fonction de l'erreur e(n) précédemment mentionnée.

Du point de vue du processus opératoire du procédé d'égalisation autodidacte objet de la présente invention, on indique que ce processus, contrairement aux processus de l'art antérieur, n'a pas pour objet d'inverser le canal de transmission, mais, au contraire, d'isoler dans le signal reçu, c'est-à-dire les signaux à module constant transmis smct, un signal de module constant.

Un principe voisin a été proposé dans la demande de brevet français n° 96 13395. Toutefois, dans la demande de brevet français précitée, le processus utilisé est avant tout destiné à la réception dans le cadre de la transmission dite FM synchrone, situation dans laquelle le nombre d'échos est très limité, bien souvent un seul écho. Alors que le processus proposé dans la demande de brevet français précitée est parfaitement adapté à cette forme de canal et présente des performances remarquables en présence d'un écho d'amplitude relative pouvant dépasser 1 et, le cas échéant, de plusieurs échos d'amplitude relative beaucoup plus faible, dans un rapport 5, le processus précité s'est révélé moins performant dans le cas d'une propagation à trajets multiples, situation dans laquelle il est fréquent d'être confronté à un canal de transmission formé de plusieurs échos forts d'amplitude relative supérieure à 0,5.

Le procédé objet de la présente invention et le processus mis en oeuvre diffèrent du précédent, dans la mesure où, contrairement à ce dernier, ils permettent l'égalisation d'un canal de transmission composé d'un nombre quelconque d'échos. Il apparaît donc mieux adapté à la propagation multi-trajet, notamment lorsque le canal de transmission correspond à celui du radiotéléphone mobile en milieu urbain et suburbain.

Le processus utilisé pour la mise en oeuvre du procédé objet de la présente invention, tel que représenté en figure 2a, correspond à celui d'une égalisation à retour de décision adaptatif, processus connu en langage anglosaxon sous le nom de *Decision Feedback Equalizer*, ou DFE adaptatif, dans lequel le critère de décision, c'est-à-dire de comparaison du signal à une valeur de seuil, est remplacé par l'étape de traitement non linéaire, c'est-à-dire l'étape 103.

Le traitement utilisé pour la mise en oeuvre du procédé d'égalisation, objet de la présente invention, tel que représenté en figure 2a, est un traitement numérique et synchrone tel qu'illustré par les étapes successives précédemment décrites. Ces étapes sont réalisées séquentiellement pour chaque échantillon successif.

La somme des échos, c'est-à-dire le signal d'écho estimé $X_1(n)$, valeur estimée sur au moins l'instant d'échantillonnage précédent, ainsi que mentionné précédemment dans la description, est en fait retranché à l'étape 102 au signal numérique complexe y(n), et l'étape de traitement non linéaire 103 permet de reconstruire le signal utile $X_0(n)$ dans des conditions qui seront décrites ci-après dans la description.

En ce qui concerne l'étape 101 d'estimation des signaux d'écho en signal d'écho estimé $\tilde{X}_1(n)$, on indique que le filtrage adaptatif utilisé à l'étape précitée est réalisé au moyen d'un algorithme adaptatif.

A titre d'exemple non limitatif, on indique que le filtrage adaptatif précité est avantageusement réalisé sur critère de minimisation pour chaque échantillon de rang n d'une fonction coût du type, relation (5) :

$$J_{p,q,r}(n) \;=\; E\left[\,\big|\,|z(n)|^p \;-\; |\widehat{X_0}(n)|^r\,\big|^q\right]$$

Dans la relation précitée, on indique que :

E  représente l'espérance mathématique d'une fonction d'écart des modules du signal complexe corrigé et du signal utile à module sensiblement constant ;

p, q, r  sont des entiers positifs.

On indique que, d'une manière générale, les entiers p et r ont même valeur ou que, dans un mode de réalisation particulier qui sera décrit ultérieurement dans la description, p≠r avec toutefois r=O.

Dans un tel cas, on indique que la fonction de coût est réalisée par rapport à la valeur normée, prise égale à 1, de l'amplitude du signal utile à module sensiblement constant, ainsi qu'il sera décrit ultérieurement dans la description ;

$z(n)$    désigne le signal numérique complexe corrigé ;

$X_0(n)$    désigne le signal utile à module sensiblement constant, en particulier pour l'échantillon de la période d'échantillonnage courante.

Dans un mode de réalisation particulier, on indique que la fonction de coût peut être de la forme, pour p=r=1 et q=2, relation (6) :

$$J_{1.1.2}(n) = E\left\{ \left| |z(n)| - |\hat{X}_0(n)| \right|^2 \right\}$$

D'une manière générale, on indique que la valeur de $|\hat{X}_0(n)|$ varie peu au cours du temps, c'est-à-dire à l'échelle du filtre, ce qui justifie la désignation de signal utile à module sensiblement constant. Dans ces conditions, la fonction coût précitée peut être interprétée comme une variante du critère de module constant connue de l'état de la technique et telle qu'illustrée par TREICHLER et AGEE "*A new Approach to Multipath Correction of Constant Modulus Signals*", IEE Trans. Acoust. Speech Signal Processing, vol. ASSP-31, pp. 459-472, Apr. 1983.

Après la mise à jour du filtrage adaptatif au moyen de l'algorithme adaptatif et de la fonction de coût précitée, une prédiction de la somme des échos, c'est-à-dire l'estimation du signal d'écho $X_1(n)$ est effectuée pour l'instant courant, c'est-à-dire la période d'échantillonnage courante, par l'intermédiaire du filtre dont l'entrée est en fait constituée par les N derniers échantillons antérieurs du signal utile à module sensiblement constant, ces échantillons étant bien entendu mémorisés, afin de permettre la mise en oeuvre de l'étape 101 précitée.

On constate ainsi que le processus mis en oeuvre est parfaitement autodidacte et que l'originalité de celui-ci réside dans le processus de filtrage non linéaire 103, lequel permet d'obtenir une adaptation du type DFE précité, non dans le cas de signaux numériques selon la technique connue de l'art antérieur, mais, au contraire, pour des signaux analogiques.

En ce qui concerne le processus d'adaptation du filtrage adaptatif réalisé à l'étape 101, ce dernier est effectué à partir d'un algorithme du gradient de la fonction coût, relation (5) ou (6).

Ainsi, à titre d'exemple non limitatif, la loi d'adaptation de la fonction de transfert de filtrage adaptatif entre chaque échantillon de période courante de rang n et de période précédente de rang n-1, vérifie la relation (7) :

$$H(n) = H(n-1) + \delta\lambda e^*(n)\hat{X}_0(n-1).$$

Dans la relation précitée,

$H(n), H(n-1)$    désignent les coefficients du filtrage adaptatif pour les échantillons de rang n et n-1 respectivement ;

$\delta$    est une valeur réelle positive arbitraire de pas d'adaptation, inférieure à 1 ;

$\lambda$    est une valeur réelle positive arbitraire voisine de 1 par valeur inférieure ;

$e^*(n)$    désigne la valeur conjuguée de l'erreur pondérée, différence entre le signal numérique complexe corrigé z(n) de rang n et le signal utile à module sensiblement constant $X_0(n-1)$ de rang n-1, l'erreur pondérée vérifiant la relation :

$$e(n) = \lambda \left[ |z(n)| - |\hat{X}_0(n-1)| \right]e^{j\varphi} ;$$

$\varphi$    désigne l'argument de phase du signal numérique complexe corrigé z(n).

Une description plus détaillée de l'étape 103 de traitement non linéaire du signal numérique complexe corrigé z(n) sera maintenant donnée en liaison avec la figure 2b.

Pour chaque échantillon successif de rang n de période courante, l'étape de filtrage non linéaire 103 consiste par exemple à séparer le signal numérique complexe corrigé z(n) en un signal représentatif du module |z(n)|, respecti-

vement de la phase φ du signal numérique complexe corrigé, cette opération de séparation étant réalisée à l'étape 1030.

L'étape 1030 précitée est suivie d'une étape 1031 consistant à soumettre le signal représentatif du module |z(n)| du signal numérique complexe corrigé à un filtrage de type passe-bas pour délivrer un signal à module sensiblement constant, lequel, pour cette raison, est désigné par m(n). Le filtrage passe-bas réalisé à l'étape 1031 précitée, peut par exemple consister en un filtrage passe-bas de zéro à quelques centaines de hertz par exemple. Il permet ainsi de ne conserver que l'amplitude des signaux très lentement variables, ce qui correspond à la propagation des signaux à module sensiblement constant indépendamment de l'existence des trajets multiples et échos divers.

A l'issue de l'étape 1031, on dispose du signal à module sensiblement constant m(n) et du signal représentatif de la phase φ du signal numérique complexe corrigé. Après séparation du module et de la phase à l'étape 1030, le signal représentatif de la phase φ du signal numérique complexe corrigé est disponible et utilisé sans autre traitement et, pour cette raison, est représenté transmis à l'étape suivante 1032 par une ligne en pointillé.

Suite à l'étape 1031 précitée, une étape 1032 est prévue, laquelle consiste à soumettre le signal à module sensiblement constant m(n) et le signal représentatif de la phase du signal numérique complexe corrigé, le signal φ, à un processus de reconstruction pour engendrer le signal utile à module sensiblement constant. Dans ces conditions, le signal utile à module sensiblement constant $X_0(n)$ vérifie la relation (8) :

$$\widehat{X_0}(n) = m(n).e^{j\varphi} = |\widehat{X_0}(n)|.e^{j\varphi}.$$

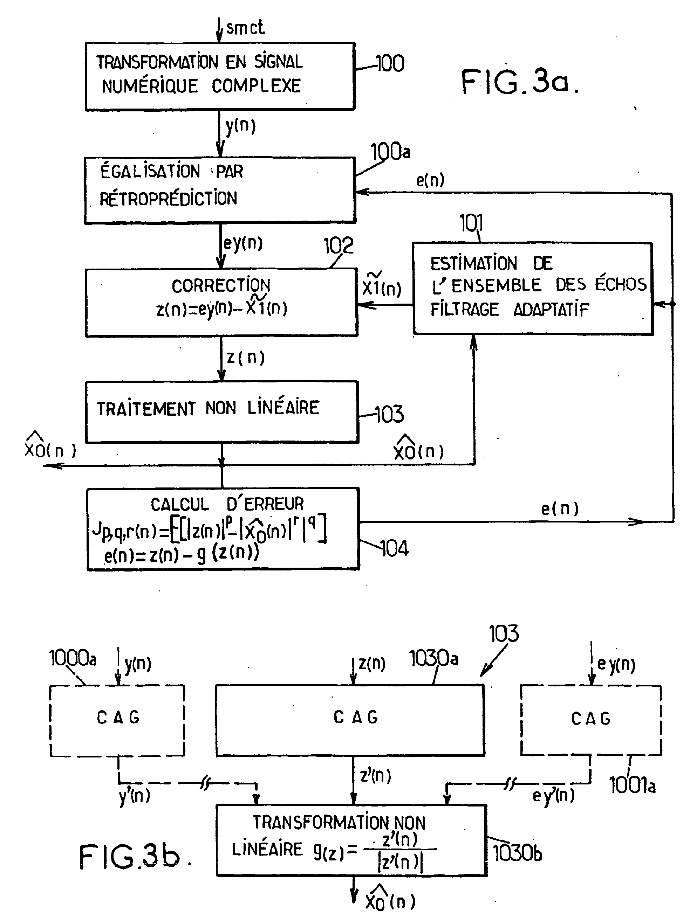

Une première variante de mise en oeuvre du procédé d'égalisation autodidacte, objet de la présente invention, sera maintenant décrite en liaison avec la figure 3a et la figure 3b.

La première variante de réalisation précitée est mise en oeuvre compte tenu de l'observation précédemment mentionnée dans la description selon laquelle un canal de transmission d'un signal quelconque est un canal de transmission à phase mixte, c'est-à-dire un canal de transmission comportant différentes parties génératrices d'échos à phase minimale et d'échos à phase maximale.

Dans la première variante de réalisation précitée, telle qu'illustrée en figure 3a, le processus d'égalisation mis en oeuvre est basé sur une modélisation de la fonction de transfert du canal de transmission.

Le processus précité consiste à séparer les parties à minimum et à maximum de phase précédemment mentionnées.

Un canal à minimum de phase $C^I(z)$ et comportant P valeurs zéro vérifie la relation (9) :

$$C^I(z) = \prod_{i=1}^{P}(1-z_i^I z^{-1}) \qquad \text{avec } |z_i^I| < 1.$$

La notation $z_i^I$ désigne les zéros intérieurs au cercle unité.

De la même manière, un canal à maximum de phase $C^\varepsilon(z)$ vérifie la relation (10) :

$$C^E(z) = \prod_{i=1}^{Q}(z^{-1}-(z_i^E)^{-1}) \qquad \text{avec } |z_i^E| > 1.$$

La notation $z_i^\varepsilon$ désigne les zéros extérieurs au cercle unité.

En réalité, le canal est à phase mixte et vérifie donc la relation (11) :

$$C(z) = FC^I(z)C^E(z)$$

relation dans laquelle F est une constante multiplicative complexe.

Les deux parties à maximum de phase et à minimum de phase sont égalisées séparément, d'une part, au moyen d'un rétroprédicteur pour la partie à maximum de phase, et, d'autre part, au moyen d'un prédicteur pour la partie à minimum de phase.

Pour une description plus détaillée d'un processus d'égalisation autodidacte correspondant, on pourra utilement se reporter à l'article publié par O.MACCHI, C.A.F.DA ROCHA, J.M.T.ROMANO, intitulé "*Egalisation adaptative autodidacte par rétroprédiction et prédiction",* acte du XIVème Colloque GRETSI, Juan-les-Pins, pages 491 à 494, Septembre 1993.

En ce qui concerne le processus effectivement utilisé, tel que décrit par l'article précité, on indique que le canal correspondant à la partie à minimum de phase est rigoureusement égalisé par un filtre récursif pur, alors que le canal à maximum de phase nécessite la mise en oeuvre d'un développement en série en z de l'inverse du canal, en considérant le fait que les zéros du canal sont à l'extérieur du cercle unité.

En ce qui concerne l'égalisation des échos à maximum de phase, on indique que cette égalisation est basée sur un développement limité et que le processus d'égalisation proprement dit est donc approximatif.

Un autre processus d'égalisation autodidacte, plus particulièrement destiné à l'égalisation autodidacte de signaux à module constant, a été proposé dans l'article publié par J.KARAOGUZ, intitulé "*A Generalized DD-BLIND Algorithm applied to Equalization of Relay fading Mobile Communication Channels*", Ph.D Dissertation, North Carolina State University, 1992.

Dans le processus précité, le critère de décision est remplacé par une non linéarité convenablement choisie. Le processus mis en oeuvre dans l'article précité correspond à une généralisation de l'algorithme CMA précédemment mentionné dans la description.

La non linéarité choisie correspond à la non linéarité utilisée pour les égaliseurs de BUSSGANG pour l'algorithme CMA (2,2) ou l'algorithme CMA (1,2), par exemple.

Le processus décrit par J.KARAOGUZ peut être rapproché de celui décrit par O.MACCHI et autres en remplaçant le critère de blanchiment par un critère de module constant.

Toutefois, le processus précité décrit par J.KARAO-GUZ, représenté en figure 7a, bien qu'adapté aux signaux à module constant, présente l'inconvénient d'une tendance à converger vers des états stables non désirables. Dans une telle situation, la seule solution consiste à ré-initialiser les coefficients des filtres avant et du filtre adaptatif utilisé.

Afin de remédier aux inconvénients précités, et selon une caractéristique avantageuse du procédé objet de la présente invention dans sa première variante de réalisation, celui-ci consiste, suite à l'étape consistant à transformer les signaux à module constant transmis en un signal numérique complexe, c'est-à-dire suite à l'étape 100, et préalablement à l'étape d'estimation 101, puis de correction 102, ainsi que représenté en figure 3a, à soumettre, en une étape 100a, le signal numérique complexe $y(n)$ à une étape d'égalisation par rétroprédiction pour engendrer un signal utile intermédiaire sensiblement égalisé en écho à phase maximale. Le signal engendré au cours de l'étape d'égalisation par rétroprédiction 100a, ainsi que représenté en figure 3a, est pour cette raison noté $ey(n)$.

En outre, dans l'étape consistant à corriger le signal numérique complexe, étape 102, au signal numérique complexe $y(n)$ est substitué le signal utile intermédiaire $ey(n)$ pour engendrer un signal utile intermédiaire corrigé. Pour des questions de simplification de notation, on indique que le signal utile intermédiaire corrigé est désigné par $z(n)$ de la même façon que dans le cas de la figure 2a. Bien entendu, le signal utile intermédiaire corrigé $z(n)$ est soumis au traitement non linéaire $103$ pour engendrer le signal utile à module sensiblement constant, lequel, pour la même raison, porte la même référence, $X_0(n)$, lequel est alors égalisé en échos à phase maximale et en échos à phase minimale.

Bien entendu, l'étape 104 de calcul de l'erreur $e(n)$ est également réalisée sur la base du signal utile intermédiaire corrigé $z(n)$ et d'un traitement non linéaire de ce signal. Le signal d'erreur vérifie la relation (12) :

$$e(n) = z(n) - g(z(n)),$$

relation dans laquelle $g(z(n))$ désigne une transformation non linéaire. L'erreur $e(n)$ obtenue suite à l'étape 104 permet alors, conformément à un aspect particulièrement avantageux du procédé objet de la présente invention dans sa première variante de réalisation, d'effectuer l'étape d'égalisation par rétroprédiction à l'étape 100a et le filtrage adaptatif à l'étape 101 pour réaliser l'estimation de l'ensemble des échos $X_1(n)$, compte tenu de l'égalisation par rétroprédiction, en fonction de l'erreur $e(n)$ précédemment citée.

Un mode de mise en oeuvre particulièrement avantageux du traitement non linéaire à l'étape 103, permettant la reconstruction du signal utile à module sensiblement constant $X_0(n)$ sera maintenant décrit en liaison avec la figure 3b.

Selon la figure précitée, on indique que l'étape de traitement non linéaire 103 du signal numérique complexe corrigé, respectivement du signal utile intermédiaire corrigé $z(n)$, peut consister, ainsi que représenté sur la figure précitée, à soumettre en une étape notée 1030a, l'un des signaux tels que le signal numérique complexe $y(n)$, le signal numérique complexe corrigé $z(n)$ ou le signal utile intermédiaire $ey(n)$, à un processus de contrôle automatique de gain. Ce processus peut être réalisé sous forme d'une boucle de CAG habituelle qui peut être ajustée de façon à minimiser la fonction coût de la relation (5) et, à ce titre, ne sera pas décrit en détail. L'étape 1030a permet de délivrer, suite au processus de contrôle automatique de gain, un signal calibré dont le module est sensiblement constant, noté respectivement y'(n) lorsque le processus de contrôle automatique de gain est appliqué sur le signal numérique complexe y(n) en une étape notée 1000a et représentée pour cette raison en trait mixte sur la figure 3b, z'(n) lorsque l'étape 1030a de contrôle automatique de gain est appliquée sur le signal numérique complexe corrigé z(n), ou encore ey'(n) lorsque le processus de contrôle automatique de gain est appliqué en une étape 1001a sur le signal utile intermédiaire ey(n) par exemple. Chacun des signaux précités, constituant un signal calibré à module sensiblement constant, est alors soumis ensuite en une étape 1030b, représentée sur la figure 3b, à une transformation non linéaire pouvant par exemple vérifier la relation (13) :

$$g(z) \;=\; z'(n)/\left|z'(n)\right|$$

pour délivrer le signal utile à module sensiblement constant $\hat{X}_0(n)$. On comprend bien sûr que la transformation non linéaire g(z) est appliquée de la même manière, soit au signal calibré y'(n), ou ey'(n) en fonction de l'option choisie.

Le procédé d'égalisation autodidacte, objet de la présente invention, tel que décrit précédemment en liaison avec les figures 3a et 3b, donne satisfaction. Ce processus récursif permet d'égaliser les canaux de transmission à phase mixte. Toutefois, il présente quelques inconvénients notamment en termes de vitesse de convergence, car plusieurs filtres adaptatifs sont mis en cascade, ce qui entraîne une augmentation de la constante de temps globale du système. Le processus d'égalisation est donc lent et les performances après convergence ne sont pas optimales.

Une deuxième variante de mise en oeuvre du procédé d'égalisation autodidacte, objet de la présente invention, sera maintenant décrite, cette deuxième variante ayant pour objet de remédier aux inconvénients précédemment cités. En particulier, lorsque la convergence est établie, les performances de l'ensemble sont susceptibles d'être améliorées pourvu que le processus de contrôle automatique de gain puisse être supprimé.

Toutefois, ce processus de contrôle automatique de gain est rendu indispensable compte tenu du critère choisi, transmission des signaux à module constant. Alors que dans un processus de type DFE, ainsi que précédemment mentionné, le recours à un processus de contrôle automatique de gain est évité, un tel processus DFE est toutefois inefficace en raison de la convergence vers un minimum trivial stable dans les cas difficiles.

Il en est de même en ce qui concerne le processus décrit par J.KARAOGUZ précédemment mentionné dans la description, en raison du fait que des minima stables non désirables sont atteints, le processus entraînant alors une oscillation.

La deuxième variante de réalisation du procédé d'égalisation autodidacte, objet de la présente invention, permet de remédier aux inconvénients précités.

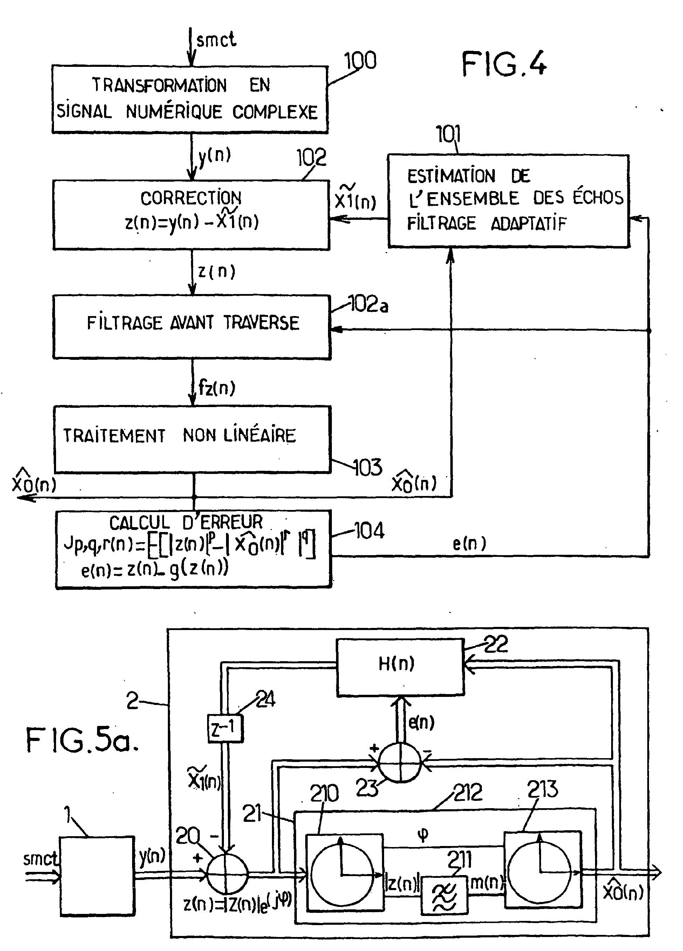

Selon cette deuxième variante représentée en figure 4 et pour un canal de transmission à phase mixte, tel que précédemment mentionné dans la description, ce procédé consiste, dans cette deuxième variante de mise en oeuvre, préalablement à l'étape consistant à soumettre le signal numérique complexe corrigé z(n) à l'étape de traitement non linéaire 103, pour engendrer le signal utile à module sensiblement constant, à soumettre, en une étape 102a, le signal numérique complexe corrigé z(n) à une étape de filtrage transverse pour engendrer un signal numérique complexe corrigé filtré, noté fz(n) pour cette raison.

En outre, dans l'étape de traitement non linéaire 103, au signal numérique complexe corrigé z(n) est substitué le signal numérique complexe corrigé filtré fz(n), lequel est donc soumis à l'étape de traitement non linéaire 103 précitée, pour engendrer le signal utile à module sensiblement constant $\hat{X}_0(n)$ égalisé en échos à phase maximale et en échos à phase minimale. En ce qui concerne l'étape 103 de traitement non linéaire, celle-ci est alors réduite à la transformation non linéaire 1030b de la figure 3b, car l'étape de contrôle automatique de gain n'est plus nécessaire, ainsi qu'il sera décrit ultérieurement dans la description. Bien entendu, et de la même façon que dans le cas de la figure 2a ou de la figure 3a, dans la deuxième variante de mise en oeuvre du procédé d'égalisation autodidacte, objet de la présente invention, l'étape 104 du calcul d'erreur e(n) est réalisée de manière semblable à la première variante de réalisation, relation (12).

En outre, l'étape de filtrage avant 102a ou filtrage transverse, et l'étape de filtrage adaptatif 101 permettant de réaliser l'estimation de l'ensemble des échos $\hat{X}_1(n)$, compte tenu de l'égalisation introduite par le filtrage avant transverse 102a, sont réalisées en fonction du signal d'erreur e(n) entre le signal numérique complexe corrigé filtré et le signal utile à module sensiblement constant $\hat{X}_0(n)$.

En ce qui concerne l'opération de filtrage avant réalisée à l'étape 102a, on indique que celle-ci est réalisée au moyen d'un filtre transverse, cette opération de filtrage étant alors sensiblement équivalente au processus d'égalisation par rétroprédiction pour les échos à phase maximale, opération associée à celle de contrôle automatique de gain, qui peut alors être avantageusement supprimée.

En ce qui concerne l'étape de traitement non linéaire réalisée à l'étape 103 de la figure 4, on indique que la fonction non linéaire utilisée correspond à la non linéarité mise en oeuvre pour les processus d'égalisation de BUSSGANG.

Le tableau ci-après fournit un certain nombre d'exemples spécifiques :

## Tableau 1

| Algorithme | Non linéarité $g(y)$ |
|---|---|
| DFE | $\hat{y}$ valeur décidée |
| Sato | $y\,\text{sign}(y)$ |
| Stop-and-Go | $\frac{1}{2}\left[(f^R + f')\hat{e} + (f^R - f')\hat{e}^*\right]$ |
| Godard p-q | $\frac{y}{|y|}\left\{|y| - |y|^{p-1}\big||y|^p - r^p\big|^{q-1}\text{sign}\left(|y|^p - r^p\right)\right\}$ |
| Godard p=q=2, r=1 CMA(2,2) | $\frac{y_n}{|y_n|}\left(2|y_n| - |y_n|^3\right)$ |
| Godard p=1,q=2,r=1 CMA(1,2) | $\frac{y_n}{|y_n|}$ |

Dans le tableau précité, on indique que $y$ = fz(n) pour des simplifications de notation et que $f^R$ et $f'$ dsignent des drapeaux tels que définis dans l'article de G. Picchi et G. Prati "*Blind equalization and carrier recovery using* a *Stop and Go decision directed algorithm*", IEEE Trans. on Com., vol COM-35, N° 9, pp. 877-887, Sept. 1987.

Il apparaît ainsi que le processus mis en oeuvre d'égalisation autodidacte, objet de la présente invention, dans le cadre du procédé et notamment de sa deuxième variante de réalisation, est très large et couvre des domaines de transmission de signaux aussi variés que la transmission et les télécommunications par signaux numériques hertziennes, la transmission de signaux acoustiques et la transmission de signaux numériques par satellite.

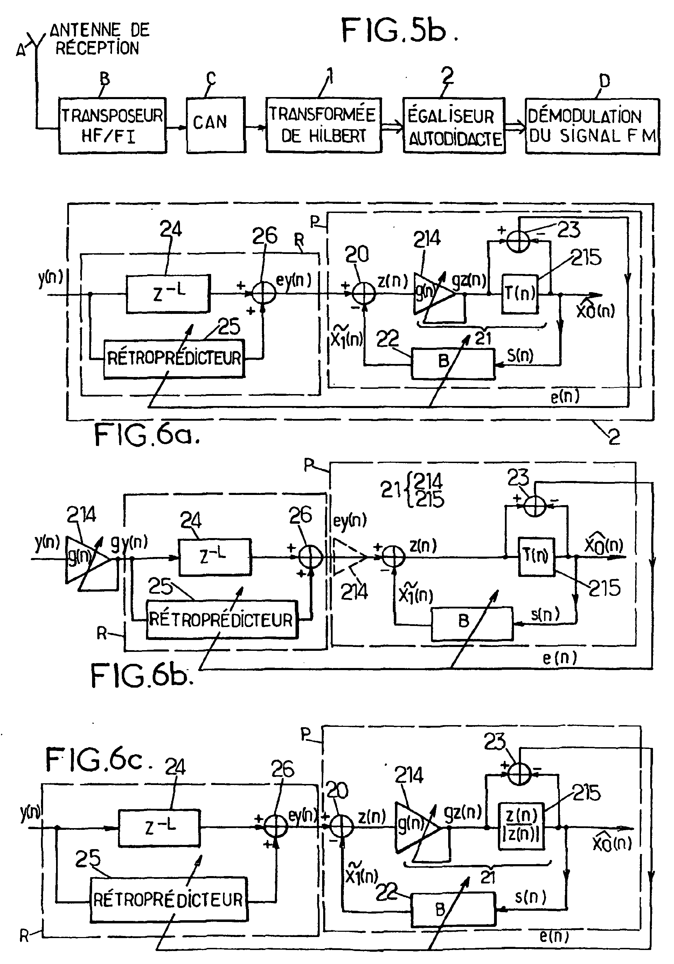

Une description plus détaillée d'un dispositif d'égalisation autodidacte d'un canal de transmission de signaux à module constant permettant la mise en oeuvre du procédé objet de la présente invention dans sa version la plus générale, sera maintenant donnée en liaison avec la figure 5a et la figure 5b.

Ainsi que représenté sur la figure 5a précitée, le dispositif selon l'invention comporte, en vue d'engendrer un signal utile à module sensiblement constant $X_0(n)$, au moins un module 1 de transformation des signaux à module sensiblement constant transmis smtc en un signal numérique complexe y(n).

D'une manière générale, on rappelle que le module 1 de transformation des signaux à module constant, lorsque les signaux sont reçus sous forme analogique ainsi que par exemple dans le cadre de la transmission FM ou dans le cas du radiotéléphone, peut comporter avantageusement un module échantillonneur associé à des circuits de réception de type classique permettant de délivrer un signal numérique échantillonné.

En ce qui concerne la transformation proprement dite du signal numérique échantillonné en un signal numérique complexe, on indique que cette transformation peut être réalisée de manière connue dans l'état de la technique au moyen d'un module de transformée de Hilbert, permettant de délivrer la partie réelle et la partie imaginaire constitutives du signal numérique complexe précité. Un tel module de transformée de Hilbert ne sera pas décrit en détail, car ce type de module de traitement est connu de l'état de la technique.

En outre, ainsi que représenté sur la figure 5a précitée, le dispositif objet de la présente invention comporte un module égaliseur autodidacte proprement dit, portant la référence 2.

Le module égaliseur autodidacte proprement dit 2 comprend au moins un module 22 d'estimation, pour chaque échantillon de période courante, de l'ensemble des signaux d'écho en un signal d'écho estimé $X_1(n)$. L'estimation est effectuée sur au moins la période d'échantillonnage précédant la période d'échantillonnage courante au moyen d'un filtre adaptatif appliqué au signal utile à module sensiblement constant précédemment cité $X_0(n)$.

Un module 20 de correction du signal numérique complexe y(n) reçoit le signal numérique complexe précité ainsi que sur une entrée de soustraction le signal d'écho estimé $X_1(n)$, pour délivrer un signal numérique complexe corrigé, le signal z(n). Le signal numérique complexe corrigé vérifie la relation :

$$\mathbf{z(n)} \quad = \quad |\mathbf{z(n)}| \mathbf{e^{j\phi}}.$$

En outre, un module 21 de traitement non linéaire est prévu, lequel reçoit le signal numérique complexe corrigé z(n) et permet d'engendrer le signal utile à module sensiblement constant $X_0(n)$.

Enfin, un module 23 de calcul de l'erreur entre le signal numérique complexe corrigé z(n) et le signal utile à module sensiblement constant reçoit le signal numérique complexe corrigé précité et le signal utile à module sensiblement constant sur une entrée de soustraction, et délivre un signal d'erreur, le signal e(n). Le module d'estimation par filtrage adaptatif 22 est piloté par le signal d'erreur e(n).

Le fonctionnement de l'ensemble, tel que représenté en figure 5a, est le suivant. Dans l'exposé qui suit, on désigne par :

$$\mathbf{H^t(n)} \quad = \quad (\mathbf{h_0}, \ \mathbf{h_1}, \ldots, \ \mathbf{h_{N-1}})$$

l'ensemble des coefficients du filtre à coefficients complexes permettant de réaliser l'estimation par filtrage adaptatif et par :

$$\widehat{\mathbf{X}}{}^t_0(\mathbf{n}) \quad = \quad (\widehat{\mathbf{X}}_0(\mathbf{n}), \widehat{\mathbf{X}}_0(\mathbf{n-1}), \ldots, \widehat{\mathbf{X}}_0(\mathbf{n-N+1})).$$

le vecteur d'entrée du filtre, c'est-à-dire la succession d'échantillons du signal utile à module sensiblement constant pour la période courante et une pluralité de périodes antérieures à la période courante.

L'estimation du signal d'écho estimé $X_1(n)$ s'obtient, au moins à l'instant précédent, en sortie du module de filtrage 22.

Dans le cas où l'estimation est effectuée sur l'échantillon précédant l'échantillon de période courante, ainsi que représenté de manière simplifiée en figure 5a, le module 24 représentant un élément retardateur d'une période d'échantillonnage et, pour cette raison, dénoté $z^{-1}$, la relation (14) ci-après est vérifiée :

$$\widetilde{\mathbf{X}}_1(\mathbf{n}) \quad = \quad \mathbf{H^\dagger(n-1)}\,\widehat{\mathbf{X}}_0(\mathbf{n-1})$$

$$\mathbf{z(n)} \quad = \quad \mathbf{y(n)} \ - \ \mathbf{H^\dagger(n-1)}\,\widehat{\mathbf{X}}_0(\mathbf{n-1})$$

Dans cette relation, le signe $\dagger$ désigne la matrice transposée et conjuguée, c'est-à-dire la matrice transposée et conjuguée de la matrice H(n).

Le signal numérique complexe corrigé z(n) est ensuite soumis au traitement non linéaire, le module du signal numérique complexe corrigé z(n) étant soumis à un filtrage passe-bas au moyen du module de traitement non linéaire 21, lequel, dans ce but, peut être constitué par un filtre récursif du premier ordre, lequel vérifie la relation (15) :

$$|\widehat{\mathbf{X}}_0(\mathbf{n})| \quad = \quad \lambda|\widehat{\mathbf{X}}_0(\mathbf{n-1})| \ + \ (1-\lambda)|\mathbf{z(n)}|$$

Dans cette relation, $\lambda$ est le paramètre défini précédemment dans la description, valeur réelle proche de 1 par valeur inférieure. Cette valeur peut être prise égale à 0,99 par exemple.

On notera que d'autres types de filtrage de type passe-bas peuvent être choisis sans sortir du cadre de l'objet de la présente invention.

Le signal utile à module sensiblement constant $\hat{X}_0(n)$ est alors reconstruit par recombinaison du module filtré du signal numérique complexe corrigé et de la phase numérique complexe.

Le signal utile à module sensiblement constant vérifie la relation (8) précédemment mentionnée dans la description.

L'opération suivante consiste alors en la mise à jour de la fonction de transfert du filtre H(n) au moyen de la fonction coût.

La fonction coût peut par exemple être obtenue à partir de la fonction $J_{p,q,r}(n)$ pour p = r = 1 et q = 2. Elle vérifie alors la relation (6) :

$$J_{1.1.2}(n) \;=\; E\left\{ (|z(n)| - |\hat{X}_0(n)|)^2 \right\}.$$

Pour un signal d'erreur $e(n) = z(n) - \hat{X}_0(n)$, et compte tenu de la relation (8) précédemment citée dans la description, il vient, relation (16) :

$$J_{1.1.2}(n) \;=\; E(|e(n)|^2).$$

D'après la relation (15), le signal d'erreur s'écrit également, relation (17) :

$$e(n) \;=\; \lambda[\,|z(n)| - |\hat{X}_0(n-1)|\,]e^{(J\varphi)}.$$

L'algorithme d'adaptation est alors mis en oeuvre au moyen d'un algorithme LMS classique par exemple, obtenu en calculant le gradient de la fonction coût, lequel vérifie la relation (18) :

$$\nabla(J) \;=\; -2\lambda^2 z^*(n)\left(1 - \frac{|\hat{X}_0(n-1)|}{|z(n)|}\right)\hat{X}_0(n-1)$$

L'algorithme d'adaptation vérifie alors la relation (19) :

$$H(n) \;=\; H(n-1) + \delta\lambda e^*(n)\,\hat{X}_0(n-1).$$

Dans l'ensemble des relations, on indique que l'opérateur * désigne le complexe conjugué, $\delta$ désignant le pas d'adaptation choisi égal par exemple à 0,001.

Enfin, le signal d'écho estimé, pour l'échantillon suivant de rang n+1, est obtenu à partir de la relation (20) :

$$\tilde{X}_1(n+1) \;=\; H^\dagger(n)\,\hat{X}_0(n).$$

En ce qui concerne le module de traitement non linéaire 21, en référence à la figure 5a, on indique que celui-ci peut comprendre avantageusement un module 210 de conversion de coordonnées cartésiennes en coordonnées polaires recevant le signal numérique complexe corrigé z(n) et délivrant un signal paramètre de module, noté pour cette raison |z(n)| et un signal paramètre d'argument de phase, noté $\varphi$, cet argument de phase représentant l'argument de phase entre le signal numérique complexe corrigé et le signal utile à module sensiblement constant $X_0(n)$.

Le module de filtrage non linéaire 21 comporte également un module de filtrage passe-bas 211 recevant le signal paramètre de module |z(n)| et délivrant un signal à module sensiblement constant, noté m(n). Ce module de filtrage passe-bas correspond, ainsi que mentionné précédemment dans la description, à un filtre passe-bas dont la fréquence de coupure est à quelques centaines de hertz par exemple.

Enfin, le module de filtrage non linéaire 21 comprend un module de conversion de coordonnées polaires en coordonnées cartésiennes recevant le signal paramètre d'argument de phase φ précité par une connexion 212, ainsi que le signal à module sensiblement constant m(n) et délivrant le signal utile à module sensiblement constant $X_0(n)$.

Des indications d'évaluation de performances du dispositif d'égalisation autodidacte tel que représenté en figure 5a seront maintenant données dans le cadre d'une application à la réception de signaux modulés en fréquence, en liaison avec la figure 5b dans un circuit récepteur de type circuit récepteur FM.

Dans cette application, le dispositif d'égalisation autodidacte objet de la présente invention est réputé comporter le module égaliseur autodidacte 2 tel que représenté en figure 5a.

Le signal FM dont la fréquence porteuse se situe autour de 100 MHz reçu par une antenne de réception A est en premier lieu transposé de manière classique par un transposeur HF/FI à fréquence intermédiaire à 10,7 MHz par exemple, puis converti en signal numérique par le convertisseur analogique numérique C. Ce convertisseur peut d'ailleurs faire ou non partie du module 1 précédemment mentionné dans la description. Le signal numérique échantillonné est transformé en signal numérique complexe par le module 1 précédemment décrit dans la description, puis il est transposé en bande de base. Le signal en bande de base est un signal numérique complexe représentatif du signal source précédemment mentionné dans la description. Le module égaliseur autodidacte proprement dit 2 reçoit le signal numérique complexe y(n) précité. Pour ce qui concerne la création du signal numérique échantillonné, on indique que le convertisseur analogique numérique peut par exemple effectuer l'échantillonnage à une fréquence d'échantillonnage fe = 320 kHz.

En outre, le filtre adaptatif H(n) constitutif du module 22 est un filtre comportant par exemple N = 32 coefficients, ce qui permet l'égalisation de canaux ayant des échos jusqu'à 100 $\mu$s de retards.

Evaluation du taux de distorsion. La vitesse de convergence des processus de traitement n'étant pas critique, les processus sont réalisés sur un temps de convergence d'une seconde, c'est-à-dire 320 000 échantillons. Une tranche temporelle de signal est alors prélevée, et un sous-échantillonnage d'un facteur 2 est effectué, suivi du calcul d'une transformée de Fourier rapide sur 16 384 points.

Le taux de distorsion du signal modulant est évalué au moyen de la formule, relation (21) :

$$D \ = \ 100 \ . \ \sqrt{1 \ - \ \frac{[\ \sum_{i=1}^{N} a_i b_i \ ]^2}{[\ \sum_{i=1}^{N} a_i^2 \ ] \ [\ \sum_{i=1}^{N} b_i^2 \ ]}}$$

relation dans laquelle les paramètres $a_i$ et $b_i$ sont les valeurs de la transformée de Fourier rapide du signal original et du signal égalisé.

Au moyen de la relation (21) précitée, on indique que les déformations subies par le signal transmis sont inaudibles en-dessous d'un taux de distorsion de 10% environ.

Le dispositif d'égalisation autodidacte dans le mode de réalisation tel que précédemment décrit a été testé sur trois canaux fixes dont les fonctions de transfert sont données par la relation (22) :

$$C_1(z) \ = \ 1 \ - \ \frac{\sqrt{2}}{2} \ z^{-10}$$

$$C_2(z) \ = \ 1 \ + \ \frac{\sqrt{2}}{2} \ z^{-10} \ + \ \frac{1}{2} \ z^{-20}$$

$$C_3(z) = 1 - z^{-10}$$

On indique que, alors que les canaux $C_1(z)$ et $C_2(z)$ peuvent être égalisés au moyen des processus antérieurs connus, le troisième canal $C_3(z)$ par contre ne l'est pas.

Par ailleurs, un bruit additif blanc gaussien centré et de puissance telle que le rapport signal à bruit soit égal à 40 dB a été rajouté. Ce niveau de bruit correspond à un taux de distorsion de 9,3%.

Les taux de distorsion mesurés avant et après égalisation permettent de quantifier le gain apporté par le dispositif d'égalisation, objet de la présente invention, tel que représenté en figure 5a selon le tableau 2 donné ci-après :

**Tableau 2**

|  | avant égalisation | après égalisation |
|---|---|---|
| canal 1 | 53,8 | 9,2 |
| canal 2 | 78,4 | 10 |
| canal 3 | 99,2 | 11,5 |

Les résultats obtenus sont tout-à-fait significatifs.

Pour le canal 1 de fonction de transfert $C_1(z)$ précité, l'égalisation est parfaite et il n'y a aucune détérioration par rapport au signal original bruité.

Pour les canaux 2 et 3, on observe une très légère dégradation du signal sans toutefois que celle-ci soit audible.

Le dispositif d'égalisation objet de la présente invention fonctionne donc d'une manière tout-à-fait satisfaisante, et ce, même dans le cas du canal 3 où les dispositifs d'égalisation transverse de l'art antérieur sont divergents.

Une description plus détaillée d'un dispositif d'égalisation autodidacte plus particulièrement destiné à l'égalisation d'un canal de transmission mixte comportant des parties à phase maximale et à phase minimale, permettant la mise en oeuvre du procédé d'égalisation autodidacte, objet de la présente invention dans sa première variante de réalisation, sera maintenant donnée en liaison avec les figures 6a, 6b et 6c.

Ainsi que représenté sur la figure 6a précitée, le dispositif objet de la présente invention comporte, inséré entre le module 1 de transformation des signaux à module constant et le module de correction 20 du signal numérique complexe en un signal numérique complexe corrigé, un module R d'égalisation par rétroprédiction, recevant le signal numérique complexe y(n) et délivrant un signal utile intermédiaire sensiblement égalisé pour la partie à phase maximale du canal et pour cette raison dénoté ey(n). Le signal utile intermédiaire ey(n) est délivré au module de correction 20 précédemment cité. Le signal numérique complexe est de ce fait remplacé par le signal utile intermédiaire dans le processus d'égalisation tel que décrit précédemment dans la description.

Ainsi, le module de correction 20 permet d'engendrer un signal utile intermédiaire corrigé, lequel, pour des raisons de simplification de notation, est désigné par z(n), et le module de traitement non linéaire 21 délivre, à partir de ce dernier, le signal utile à module sensiblement constant $X_0(n)$, lequel est égalisé en échos à phase maximale par le module d'égalisation par rétroprédiction R et en échos à phase minimale par un module d'égalisation par prédiction P, ainsi que décrit précédemment dans la description, en liaison avec les figures 3a et 3b. Le module d'égalisation par prédiction P comporte bien entendu, outre le module de correction 20 et le module de traitement non linéaire 21 précités, le module d'estimation par filtrage adaptatif 22 et un module de calcul d'erreur 23, ainsi qu'il sera décrit ci-après dans la description.

En outre, et selon un aspect particulièrement remarquable du dispositif, objet de la présente invention, tel que représenté en figure 6a, le module d'égalisation par rétroprédiction R et le module d'estimation par filtrage adaptatif 22 sont pilotés en fonction de l'erreur e(n) entre le signal utile à module sensiblement constant $X_0(n)$ et le signal utile intermédiaire corrigé z(n).

Dans un mode de réalisation particulier du dispositif d'égalisation autodidacte tel que représenté en figure 6a, on indique que le module de traitement non linéaire 21, lequel reçoit le signal utile intermédiaire corrigé z(n), peut comprendre, au moins, un module 214 de contrôle automatique de gain recevant le signal utile intermédiaire corrigé z(n) et délivrant un signal utile intermédiaire corrigé calibré, c'est-à-dire d'amplitude sensiblement constante, et pour cette raison, en raison de l'opération de contrôle automatique de gain, noté gz(n).

En outre, un module de transformation non linéaire proprement dit, portant la référence 215, est prévu, lequel reçoit le signal utile intermédiaire corrigé calibré gz(n) et délivre le signal utile à module sensiblement constant $X_0(n)$.

Le mode opératoire de l'égalisation se rapproche du mode opératoire décrit par O.MACCHI et autres dans l'article précédemment mentionné dans la description.

Le module rétroprédicteur R a pour tâche d'égaliser de manière approximative la partie de canal de transmission à maximum de phase. Le module d'égalisation par rétroprédiction comporte en fait un rétroprédicteur 25 constitué par un filtre adaptatif comportant un nombre assez élevé de coefficients, de l'ordre de 25 à 30, pour permettre l'égalisation des valeurs de zéro de la fonction de transfert du canal de transmission proches du cercle unité.

Le module d'égalisation par prédiction P, et en particulier le filtre adaptatif 22, permet l'égalisation de la partie de canal à minimum de phase et ajuste le gain par l'intermédiaire du contrôle automatique de gain 214.

Cette partie de canal de transmission a égaliser s'écrit, relation (23) :

$$FC^I(z) = F(1-B^I(z)).$$

Dans cette relation, B désigne la fonction de transfert du filtre adaptatif 22.

La fonction de transfert de la boucle constituée par le module d'égalisation par prédiction P pour les échos à minimum de phase s'écrit, relation (24) :

$$\frac{g}{1-gB(z)}$$

Par identification, on constate que la boucle précitée égalise la partie de canal à minimum de phase à un déphasage près. Ce déphasage n'est pas gênant et il est possible toutefois d'ajouter au contrôle automatique de gain une boucle à verrouillage de phase, ce qui permet, dans un tel cas, de récupérer un éventuel décalage en fréquence après la transposition en bande de base.

D'une manière générale, on indique que le module de contrôle automatique de gain 214 peut être déplacé, soit en amont du module d'égalisation par rétroprédiction, ainsi que représenté en figure 6b, soit inséré entre le moyen d'égalisation par rétroprédiction R et le module de correction 20 ainsi que représenté en trait mixte sur la même figure 6b. En fait, on indique en relation avec les figures 6a et 6b que le contrôle automatique de gain 214 peut être placé sensiblement en tous point de la chaîne, sauf, d'une part, dans le module de rétroprédiction lui-même R ou, d'autre part, en aval du module de traitement non linéaire 215.

En ce qui concerne le module de traitement non linéaire 215, on indique que la non linéarité introduite correspond à la non linéarité de BUSSGANG.

A ce titre, pour l'algorithme CMA(2,2) par exemple, la fonction de transfert du traitement non linéaire vérifie la relation (25) :

$$T(z(n)) = \frac{z(n)}{|z(n)|} [2|z(n)| - |z(n)|^3]$$

et pour l'algorithme à module constant CMA(1,2), relation (26) :

$$T(z(n)) = \frac{z(n)}{|z(n)|}$$

La non linéarité introduite conformément à la relation (26) rappelle, par analogie, le processus DFE dans la mesure où on réinjecte la décision prise qui, ici, est un signal de module unité.

Sur la figure 6c, on a représenté, d'une part, le module de rétroprédiction R, ainsi que représenté d'ailleurs en figures 6a et 6b, et, d'autre part, la non linéarité introduite, vérifiant la relation (26) précitée.

Le module de rétroprédiction R comprend, ainsi que représenté sur les figures précitées, au moins, un circuit retardateur 24 de L échantillons, recevant, soit le signal numérique complexe, soit un signal numérique complexe calibré constituant un signal d'entrée, c'est-à-dire y(n) ou le signal gy(n) et délivre un signal d'entrée retardé. Il comporte également le module rétroprédicteur 25 recevant ce même signal d'entrée et délivrant un signal de rétroprédiction. Un module sommateur 26 est prévu, lequel reçoit le signal d'entrée retardé et le signal de rétroprédiction et délivre le signal utile intermédiaire sensiblement égalisé en échos à maximum de phase. Ce signal est noté dans tous les cas ey(n).

Les possibilités de choix pour la non linéarité introduite par le module de traitement non linéaire 215 sont nombreuses, car elles découlent du choix de la fonction coût, de la forme :

$$J_{p.q.o} \;=\; (\,|z(n)|^p - 1)^q$$

avec p et q entiers quelconques pour r = 0.

Une loi d'adaptation spécifique du module de filtrage adaptatif 22 dont la fonction de transfert est désignée par B et du rétroprédicteur 25, en fonction du signal d'erreur e(n), sera maintenant donnée ci-après dans le cas non limitatif de la figure 6c.

Dans un souci de simplification de notation, on désigne par s(n) le signal utile à module sensiblement constant, c'est-à-dire :

$$s(n) \;=\; \widehat{X_0}(n).$$

On note également :

- $Y^t(n) = \{y(n), y(n-1), ..., y(n-L+1)\}$

le vecteur des L dernières entrées du système, c'est-à-dire la succession d'échantillons du signal numérique complexe corrigé à l'entrée du module de rétroprédiction R ;

- $R^t(n) = \{r_0(n), r_1(n), ..., r_{L-1}(n)\}$

les N coefficients du filtre constitutif du rétroprédicteur 25 ;

- $S^t(n) = \{s(n-1), s(n-2), ..., s(n-N)\}$

le vecteur d'entrée du module de filtrage 22 permettant d'effectuer l'estimation du signal d'écho estimé $\tilde{X}_1(n)$ ;

- $B^t(n) = \{b_1(n), b_2(n), ..., b_N(n)\}$ les coefficients du filtre adaptatif 22 précédemment cité.

Pour p=1, q=2 et r=0, la fonction coût à minimiser est :

$$J(n) \;=\; (\,|gz(n)| - 1)^2$$

avec, relation (27)

$$z(n) \;=\; y(n-L) + \sum_{i=0}^{L-1} r_i(n)y(n-i) - \sum_{j=1}^{N} b_j(n)s(n-j)$$

**17**

et

$$gz(n) = g(n)z(n).$$

L'adaptation, tant du filtre arrière 22 que du filtre constitutif du rétroprédicteur 25, peut être effectuée par l'approche classique du gradient stochastique pour lequel il faut rechercher le gradient de la fonction coût.

Une étude mathématique montre que l'expression exacte du gradient dans ce cas se révèle assez complexe.

Une approximation simplificatrice consiste à prendre en considération l'hypothèse selon laquelle les décisions prises s(n), c'est-à-dire finalement chaque échantillon du signal utile à module sensiblement constant, ne dépendant pas des valeurs précédentes des coefficients du filtre. Une telle approximation trouve sa justification dans la pratique et l'on obtient un algorithme du type de régression pseudo-linéaire.

L'expression du gradient peut, dans ces conditions, être établie selon la relation (28) :

$$\frac{\partial |gz(n)|}{\partial r_k} = g^2(n) \frac{1}{2|gz(n)|} \{2z(n)y(n-k)\}$$

Dans cette relation, le membre de gauche de l'égalité représente la dérivée partielle du module du signal délivré par le module de contrôle automatique de gain 214, soit la dérivée partielle de gz(n) par rapport au coefficient $r_k$ du filtre constitutif du rétroprédicteur 25.

L'expression du signal d'erreur e(n) selon la relation (29) :

$$e(n) = gz(n) - s(n) = g(n)z(n) \left[ 1 - \frac{1}{|gz(n)|} \right]$$

permet alors, par report dans l'expression du gradient dans la relation (28), d'obtenir la loi d'adaptation ou algorithme d'adaptation du filtre constitutif du rétroprédicteur 25 selon la relation (30) :

$$R(N+1) = R(n) - \delta_R g(n)e(n)Y^*(n)$$

du filtre adaptatif constituant le filtre avant, selon la relation (31) :

$$B(n+1) = B(n) + \delta_B g(n)e(n)S^*(n)$$

et du contrôle automatique de gain selon la relation (32) :

$$g(n+1) = g(n) - \delta_g \{|gz(n)|^2 - 1\}$$

L'adaptation du contrôle automatique de gain peut également vérifier la relation :

$$G(n+1) = G(n) - \delta_g \{|gz(n)|^2 - 1\}$$

et

$$g(n+1) \quad = \quad \sqrt{|G(n+1)|}$$

Dans ces relations, $\delta_R$, $\delta_B$ et $\delta_g$ désignent les pas d'adaptation correspondants.

En ce qui concerne la stabilité de la boucle, on indique que, sur une échelle de temps suffisamment réduite, les coefficients des filtres demeurent sensiblement constants.

En ce qui concerne la stabilité de l'algorithme d'adaptation tel qu'établi précédemment, on indique que lorsque l'approximation de régression pseudo-linéaire est vérifiée, l'étude des algorithmes est simplifiée et se résume à l'étude du gradient stochastique simple.

Un exemple de mise en oeuvre d'un dispositif tel que représenté en figure 6c dans une application relative à la réception d'un signal modulé en fréquence FM, comparable à l'application donnée dans le cadre de la figure 5b, sera maintenant indiqué. Les conditions de réception sont sensiblement analogues.

Le mode opératoire du dispositif d'égalisation autodidacte, objet de la présente invention, tel que représenté en figure 6c, met en oeuvre les étapes ci-après :

- calcul de z(n) selon la relation (27) ;
- calcul de l'erreur e(n) selon la relation (29) ;
- mise à jour des filtres constitutifs des modules 22 et 25 selon les relations (30) et (31) ;
- adaptation du contrôle automatique de gain selon la relation (32) par exemple.

On obtient ainsi une structure de complexité sensiblement identique à celle de l'algorithme à module constant CMA classique.

Il est aussi possible de normaliser l'algorithme en divisant le pas d'adaptation par la puissance du signal à module constant transmis smct.

Les performances obtenues sont résumées dans le tableau 3 des situations ci-après, obtenues dans le cadre d'un objectif défini comme l'égalisation d'un canal de transmission urbain pour lequel les retards sont faibles. Dans ce but, le filtre constitutif du rétroprédicteur 25 comportait 30 coefficients, alors que le filtre du module de filtrage adaptatif 22 comportait 6 coefficients, ce qui permet l'égalisation de canaux ayant des échos jusqu'à 20 $\mu$s de retards, la fréquence d'échantillonnage étant prise égale à 320 kHz.

Le taux de distorsion est défini de la même façon que dans le cas de l'application représentée en figure 5b.

Les taux de distorsion obtenus sont indiqués en pourcentage dans les différents canaux pour le canal 1 et le canal 2 tels que précédemment mentionnés dans la description en relation avec la figure 5b et pour des canaux de transmission de type urbain précité, vérifiant les relations :

- $Cu_1(z) = 1 - 0{,}4z^{-1} - 0{,}45z^{-2}$
- $Cu_2(z) = 1 - 2.z^{-1} + 0{,}75z^{-2}$.

Le canal $Cu_1(z)$ est un canal à phase minimale destiné à évaluer la partie prédictive filtre arrière, le deuxième $Cu_2(z)$ est un canal de transmission à phase mixte permettant de tester l'ensemble du dispositif.

Dans tous les cas, un bruit additif blanc gaussien centré est enfin ajouté de la même manière que dans le cas de l'application représentée en figure 5b précédemment mentionnée dans la description. Les résultats obtenus sont résumés dans le tableau 3 ci-après dans lequel on a mesuré et reporté les taux de distorsion avant et après égalisation pour quantifier le gain apporté par le dispositif d'égalisation représenté en figure 6c.

**Tableau 3**

|  | avant égalisation | égaliseur A | égaliseur Fig.5a | égaliseur Fig.6c |
|---|---|---|---|---|
| canal 1 | 53,8 | 14 | 10 | 11,2 |
| canal 2 | 78,4 | 45,8 | 9,2 | 11,5 |
| Cu 1 | 43,2 | 30,8 | 12,1 | 9,5 |
| Cu 2 | 35 | 33 | 30 | 11,2 |

Dans le tableau précité, la colonne 1 indique les résultats avant égalisation, la colonne 2 correspond à une égalisation autodidacte telle que décrite dans la demande de brevet français n° 96 13395 déposée au nom de la demanderesse, égaliseur A, la colonne 3 concerne les résultats d'égalisation pour l'égaliseur tel que représenté en figure 5a, et, enfin, la colonne 4 est relative au dispositif d'égalisation par prédiction et rétroprédiction tel que représenté par exemple en figure 6c. Ce type de dispositif d'égalisation égalise tous les types de canaux de manière satisfaisante. Toutefois, on peut constater une légère dégradation du signal lorsque les retards introduits sont importants. Ce phénomène est dû essentiellement à la taille volontairement réduite des filtres d'égalisation, lesquels ont été dimensionnés de façon à égaliser des retards brefs.

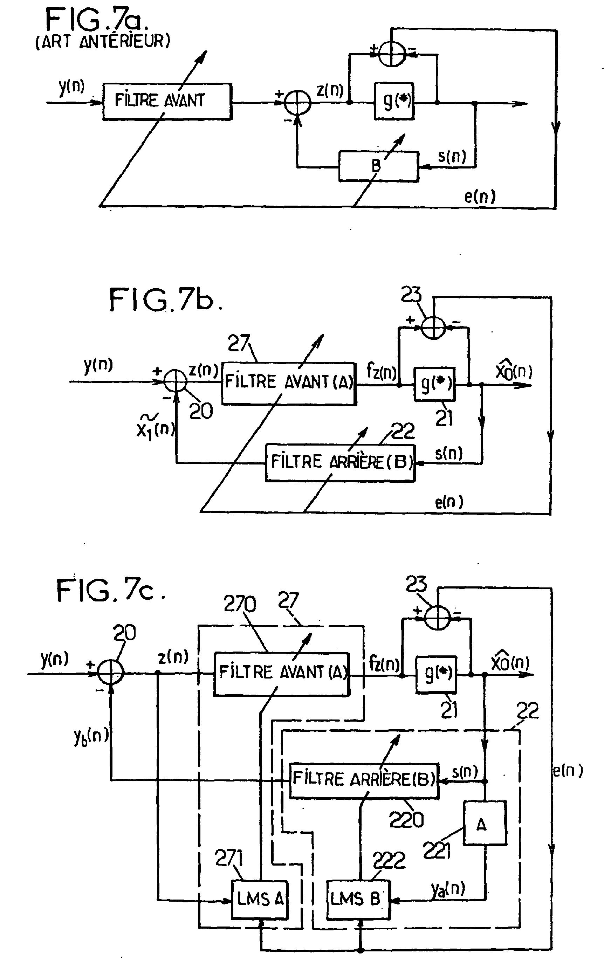

Un mode de réalisation préférentiel permettant la mise en oeuvre du procédé d'égalisation autodidacte, objet de la présente invention, dans sa deuxième variante de réalisation et en particulier de remédier aux inconvénients consécutifs au procédé d'égalisation selon l'invention dans sa première variante de réalisation, sera maintenant donné en liaison avec les figures 7a, 7b et 7c.

La figure 7a représente de manière schématique un dispositif égaliseur de l'art antérieur tel que proposé par J.KARAOGUZ et dans lequel, lorsque la convergence est atteinte, la non linéarité se résume à un court-circuit.

La fonction de transfert de l'ensemble tel que représenté en figure 7a s'écrit, relation (33) :

$$\frac{Z(z)}{Y(z)} \approx \frac{A(z)}{1+B(z)}$$

Une étude théorique montre que cette fonction de transfert permet l'égalisation des échos à minimum de phase par l'intermédiaire de la boucle ou prédicteur récursif, alors que les échos à maximum de phase ainsi que le coefficient complexe F de la relation (11) sont égalisés par l'intermédiaire du filtre avant A.

Afin de remédier aux inconvénients précités du processus d'égalisation tel que décrit précédemment, et en particulier du processus d'égalisation dans le procédé selon la présente invention dans sa première variante de réalisation, un dispositif d'égalisation autodidacte tel que représenté en figure 7b sera maintenant décrit.

D'une manière générale, ainsi que représenté sur la figure 7b précitée, ce dispositif comporte, inséré entre le module de correction 20 et le module de traitement non linéaire 21, un module de filtrage avant, module de filtrage transverse, portant la référence 27. Ce module de filtrage avant 27 reçoit le signal numérique complexe corrigé z(n) et délivre un signal numérique complexe corrigé filtré, lequel, pour cette raison, est désigné par fz(n).

Bien entendu, le signal numérique complexe z(n) est remplacé par le signal numérique complexe corrigé filtré fz(n) pour engendrer, à partir du module de traitement non linéaire 21, le signal utile à module sensiblement constant $X_0(n)$, lequel est égalisé en échos à phase maximale et en échos à phase minimale.

En outre, le module de filtrage avant 27 et le module de filtrage arrière 22, constituant le module d'estimation par filtrage adaptatif appliqué au signal utile à module sensiblement constant sont pilotés par le signal d'erreur e(n) entre le signal numérique complexe corrigé filtré fz(n) et le signal utile à module sensiblement constant $X_0(n)$.

Le mode opératoire du dispositif d'égalisation autodidacte tel que représenté en figure 7b peut être établi de la façon ci-après.

La fonction de transfert de celui-ci vérifie la relation (34) :

$$\frac{FZ(n)}{Y(n)} = \frac{A'(z)}{1 + A'(z)'B(z)}$$

Par analogie avec le processus d'égalisation tel que décrit par J.KARAOGUZ, on peut conclure que la partie à minimum de phase est traitée par le produit A'B' de la fonction de transfert, alors que la partie à maximum de phase est traitée et égalisée par la partie A' de la fonction de transfert.

Le mode opératoire et en particulier le mode d'adaptation des filtres avant et arrière, notamment le choix des algorithmes d'adaptation, sera décrit de manière plus détaillé en relation avec la figure 7c.

Sur la figure 7c, on a représenté de manière plus détaillée le filtre arrière 22 et le filtre avant 27. Le filtre arrière 22 est réputé comporter un filtre adaptatif proprement dit 220, lequel est piloté par un module d'adaptation des coefficients 222 en fonction du signal d'erreur e(n), le module d'adaptation étant lui-même piloté par un filtre 221 de fonction de transfert A correspondant à celle du filtre avant.

De la même manière, le filtre avant 27 est réputé comporter un filtre adaptatif 270, lequel est piloté, à partir d'un module d'adaptation 271 à partir du signal d'erreur e(n), le module d'adaptation 271 étant lui-même piloté à partir du signal d'entrée du filtre adaptatif 270. Le filtre 221 peut être obtenu à partir des coefficients mémorisés du filtre 270.

Afin de simplifier la notation, on note :

- $s(n) = \hat{X}_0(n)$
- $Y^t(n) = |y(n),y(n-1),...,y(n-L+1)\}$

le vecteur des L dernières entrées successives du dispositif d'égalisation autodidacte, c'est-à-dire les L derniers échantillons du signal numérique complexe ;

- z(n) et fz(n), les échantillons à l'entrée et à la sortie du filtre avant 270 pour la période d'échantillonnage courant ;
- $A^t(n) = \{a_0(n),a_1(n),...,a_{L-1}(n)\}$ les coefficients du filtre avant 270 ;
- $B^t(n) = \{b_a(n),b_2(n),...,b_N(n)\}$ les coefficients du filtre arrière 220 ;
- $S^t(n) = \{s(n-1),s(n-2),...,s(n-N)\}$ le vecteur d'entrée du filtre arrière, c'est-à-dire les N échantillons successifs du signal utile à module sensiblement constant antérieur à l'échantillon de période courante ;
- s(n) et $z_b(n)$ sont les signaux à l'entrée, respectivement à la sortie du filtre arrière 220 pour la période d'échantillonnage courante.

Dans le cas d'une non linéarité choisie correspondant à celle de l'algorithme à module constant CMA(1,2), selon lequel le module du signal utile est constant et égal à 1, la fonction coût à minimiser s'écrit, relation (35) :

$$J(n) = (|fz(n)| - 1)^2$$

avec

$$fz(n) = \sum_{i=0}^{L-1} a_i(n)z(n-i)$$

L'adaptation des filtres avant et arrière peut alors être effectuée par exemple par la méthode classique du gradient stochastique.

Le gradient complexe par rapport aux coefficients du filtre avant s'écrit, relation (36) :

$$\nabla a_k = \frac{\partial}{\partial a_{kr}} + j\frac{\partial}{\partial a_{ki}} \quad \text{pour } k=0,1,...L-1$$

avec

$$\frac{\partial fz(n)}{\partial a_{kr}} = z(n-k)$$

et

$$\frac{\partial fz(n)}{\partial a_{ki}} = jz(n-k)$$

L'approximation de pseudo-régression linéaire, basée sur la supposition selon laquelle s(n) ne dépend pas des coefficients du filtre avant, cette approximation étant justifiée du fait de l'introduction de la non linéarité en sortie de ce dernier, permet d'écrire la relation (37) :

$$\frac{\partial fz(n)}{\partial a_k} = 0$$

$$\frac{\partial fz^*(n)}{\partial a_k} = 2z(n-k)$$

L'expression du signal numérique complexe corrigé filtré fz(n), selon la relation (38) :

$$fz(n) = \sum_{i=0}^{L-1} a_i(n) \left[ z(n-i) - \sum_{j=1}^{N} b_j(n-i)s(n-i-j) \right]$$

permet d'obtenir l'expression du gradient complexe selon la relation (39) :

$$\frac{\partial fz^*(n)}{\partial b_j} = 2 \sum_{i=0}^{L-1} a_i(n)s(n-i-j)$$

La variation lente des coefficients des filtres avant et arrière permet d'écrire, relation (40) :

$$\sum_{i=0}^{L-1} a_i(n)s(n-i-j) \cong \sum_{i=0}^{L-1} a_i(n-j)s(n-i-j) = y_a(n-j)$$

L'expression du signal d'erreur e(n) = fz(n) - fz(n)/|fz(n)| et du vecteur d'entrée du filtre avant 270 de la forme :

$$z^t(n) = \{ z(n), z(n-1), \ldots, z(n-L+1) \}$$

et du vecteur de sortie du filtre 221, exprimée sous la forme :

$$Y^t_a(n) = \{y_a(n-1), y_a(n-2), \ldots, y_a(n-N)\}$$

permet d'établir les lois d'adaptation des filtres avant A et arrière B, selon la relation (41) :

$$A(n+1) = A(n) - \delta_A e(n) Z^*(n)$$

$$B(n+1) = B(n) - \delta_B e(n) Ya^*(n).$$

$\delta_A$ et $\delta_B$ désignent les pas d'adaptation réels positifs inférieurs à 1.

Le fonctionnement du dispositif tel que représenté en figure 7b ou figure 7c est le suivant :

1. Calcul de : $\quad y_b(n) = \sum_{j=1}^{N} b_j(n) s(n-j)$

avec $y_b(n) = \widetilde{X_1}(n)$

2. $z(n) = y(n) - y_b(n)$

3. $\quad fz(n) = \sum_{i=0}^{L-1} a_i(n) z(n-i)$

4. $\quad y_a(n) = \sum_{i=0}^{L-1} a_i(n) s(n-i)$

5. $e(n) = fz(n) - fz(n)/|fz(n)|$

6. Mise à jour des filtres selon la relation (41).

Un mode de réalisation a été exécuté au moyen d'un filtre avant comportant 5 coefficients et d'un filtre arrière comportant également 5 coefficients, afin de permettre l'égalisation de canaux ayant des échos retardés jusqu'à 20 $\mu$s, la fréquence d'échantillonnage étant toujours égale à 320 kHz.

Les canaux de transmission testés rencontrés dans des trajets de type urbain présentent des retards relativement faibles, de l'ordre de quelques échantillons, correspondaient aux canaux de transmission ci-après :

- $Cu_1(z) = 1 - 0,4z^{-1} - 0,45z^{-2}$
- $Cu_z(z) = 1 - 2.z^{-1} + 0,75z^{-2}$.

Un troisième canal a été utilisé afin de tester le dispositif d'égalisation tel que représenté en figure 7b ou 7c dans une configuration plus sévère, ce canal de transmission étant défini par :

- $Cu_3(z) = 1 + z^{-1} + z^{-2} + z^{-3} + z^{-3} + z^{-4} + z^{-5}$.

En outre, les canaux, canal 1 et canal 2 précédemment définis dans la description, spécifiques à la FM synchrone, ont été utilisés pour tester le même dispositif.

Un troisième canal, noté canal 3, particulièrement sévère, a été rajouté pour effectuer le test du dispositif précité, ce canal, canal 3, vérifiant la relation :

- $C_3(z) = 1 - z^{-4} + z^{-8} - z^{-12} + z^{-16}$.

Les conditions d'essai étaient identiques du point de vue de l'addition du bruit gaussien centré ainsi que défini précédemment dans la description.

Le taux de distorsion a été mesuré de la même façon que précédemment avant et après égalisation afin de quantifier le gain apporté par le dispositif d'égalisation, objet de l'invention, tel que représenté en figure 7b ou 7c.

Les résultats sont résumés dans le tableau 4 ci-après.

### Tableau 4

|  | avant égalisation | égaliseur A | égaliseur Fig. 6c | égaliseur Fig. 7c |
|---|---|---|---|---|
| canal 1 | 53,8 | 14 | 11,2 | 9,5 |
| canal 2 | 78,4 | 45,8 | 11,5 | 10 |
| canal 3 | 78,6 | 83 | 33 | 9 |
| Cu 1 | 43,2 | 30,8 | 9,5 | 8 |
| Cu 2 | 35 | 33 | 11,2 | 7,5 |
| Cu 3 | 20,4 | 11,5 | 11 | 10,5 |

On peut remarquer que les performances obtenues sont meilleures que dans le cas du dispositif permettant la mise en oeuvre du procédé d'égalisation selon l'invention dans sa première variante de mise en oeuvre, au moyen d'un rétroprédicteur avant.

Le dispositif et le procédé d'égalisation autodidacte, objets de la présente invention, tels que mis en oeuvre dans le cas de la deuxième variante, c'est-à-dire avec la structure tout récursif, permet même l'égalisation du canal 3, lequel est particulièrement sévère.

Le procédé et le dispositif d'égalisation autodidacte d'un canal de transmission objets de la présente invention, dans leurs divers modes de mise en oeuvre ou de réalisation, peuvent être utilisés pour l'égalisation de canaux de transmission aussi variés que les canaux de transmission de signaux radioélectriques, analogiques ou numériques, sonores ou ultrasonores, à module sensiblement constant, ces signaux étant transmis par voie hertzienne, satellitaire, ligne de transmission, milieu sous-marin ou terrestre. L'égalisation de ces canaux de transmission peut alors, de manière particulièrement remarquable, être réalisée en présence de signaux d'échos et/ou en présence de signaux interférents.

En particulier dans le cadre d'une utilisation pour l'égalisation d'un canal de transmission de signaux numériques le procédé d'égalisation tel que mis en oeuvre dans sa deuxième variante de réalisation et l'égaliseur correspondant représenté en figure 7b et 7c peuvent être substitués aux systèmes DFE de l'art antérieur.

On a ainsi décrit un procédé et un dispositif d'égalisation autodidacte d'un canal de transmission de signaux à module sensiblement constant particulièrement performant, dans la mesure où, d'une première part, le procédé et le dispositif précités s'appliquent à tous types de signaux et où, d'une deuxième part, le mode opératoire général, consiste à tirer partie de la récursivité, prédiction, tout en évitant les problèmes d'états stables non désirables précédemment mentionnés, des dispositifs et des processus d'égalisation autodidacte de l'art antérieur.

### Revendications

1. Procédé d'égalisation autodidacte du canal de transmission de signaux à module sensiblement constant représentatifs d'un signal source et transmis par un canal de transmission générateur de signaux d'échos, **caractérisé en ce que** ce procédé consiste au moins, en vue d'engendrer un signal utile à module sensiblement constant :

   - à transformer (100) lesdits signaux à module sensiblement constant transmis en un signal numérique complexe ;
   - a estimer (101) pour chaque échantillon de période courante l'ensemble desdits signaux d'écho en un signal d'écho estimé, par estimation sur au moins la période d'échantillonnage précédant la période échantillonnage courante au moyen d'un filtrage adaptatif appliqué audit signal utile à module sensiblement constant ;
- à corriger (102) ledit signal numérique complexe en un signal numérique complexe corrigé, par soustraction audit signal numérique complexe dudit signal d'écho estimé ;
- à soumettre (103) ledit signal numérique complexe corrigé à un traitement non linéaire pour engendrer ledit signal utile à module sensiblement constant, ledit filtrage adaptatif appliqué audit signal utile à module sensiblement constant étant réalisé en fonction de l'erreur entre ledit signal numérique complexe corrigé et ledit signal utile à module sensiblement constant.

**2.** Procédé selon la revendication 1, **caractérisé en ce que** ledit filtrage adaptatif (101) est réalisé sur critère de minimisation (104) pour chaque échantillon de rang n d'une fonction coût du type :

$$J_{p,q,r}(n) \;=\; E\,[\,|\,|z(n)|^p \;-\; |\,\widehat{X_0}(n)|^r|^q\,]$$

relation dans laquelle

E représente l'espérance mathématique d'une fonction d'écart des modules du signal complexe corrigé et du signal utile à module sensiblement constant ;
p, q, r sont des entiers positifs ;
$z(n)$ désigne le signal numérique complexe corrigé ;
$X_0(n)$ désigne le signal utile à module sensiblement constant.

**3.** Procédé selon la revendication 2, **caractérisé en ce que**, le processus d'adaptation dudit filtrage adaptatif étant effectué a partir d'un algorithme du gradient de ladite fonction de coût, la loi d'adaptation de la fonction de transfert de filtrage adaptatif entre chaque échantillon de période courante de rang n et de période précédente de rang n-1 vérifie la relation :

$$H(n) \;=\; H(n-1) \;+\; \delta\lambda e^*(n)\,\widehat{X_0}(n-1)$$

relation dans laquelle

H(n), H(n-1) désignent les coefficients du filtrage adaptatif pour les échantillons de rang n et n-1 respectivement ;
$\delta$ est une valeur réelle positive arbitraire de pas d'adaptation, inférieure à 1 ;
$\lambda$ est une valeur réelle positive arbitraire voisine de 1 par valeur inférieure ;
e*(n) désigne la valeur conjuguée de l'erreur pondérée différence entre le signal numérique complexe corrigé z(n) de rang n et le signal utile à module sensiblement constant $X_0(n-1)$ de rang n-1, erreur pondérée de la forme :

$$e(n) \;=\; \lambda\,[|z(n)| \;-\; |\widehat{X_0}(n-1)|]e^{j\varphi}$$

$\varphi$ désigne l'argument de phase du signal numérique complexe corrigé z(n).

**4.** Procédé selon l'une des revendications 1 à 3, **caractérisé en ce que** ladite étape (103) de traitement non linéaire du signal numérique complexe corrigé pour engendrer ledit signal utile à module sensiblement constant consiste, pour chaque échantillon successif de rang (n) de période courante :

- à séparer (1030) ledit signal numérique complexe corrigé en un signal représentatif du module |z(n)| respectivement de là phase $\varphi$ du signal numérique complexe corrigé ;
- à soumettre (1031) ledit signal représentatif du module |z(n)| du signal numérique complexe corrigé à un filtrage de type passe-bas pour délivrer un signal à module sensiblement constant m(n) ;
- à soumettre ledit signal à module sensiblement constant m(n) et ledit signal représentatif de là phase $\varphi$ dudit signal numérique complexe corrigé à un processus de reconstruction (1032) pour engendrer ledit signal utile à module sensiblement constant.

**5.** Procédé selon l'une des revendications 1 ou 2, **caractérisé en ce que**, pour un canal de transmission à phase mixte, comportant différentes parties génératrices d'échos à phase minimale et à phase maximale, ledit procédé consiste, suite a l'étape consistant à transformer lesdits signaux à module constant transmis en un signal numérique complexe et préalablement a ladite étape d'estimation :

- à soumettre (100a) ledit signal numérique complexe à une étape d'égalisation par rétroprédiction, pour engendrer un signal utile intermédiaire ey(n) sensiblement égalisé en échos à phase maximale, et, dans l'étape (102) consistant à corriger ledit signal numérique complexe,
- à substituer audit signal numérique complexe ledit signal utile intermédiaire ey(n) pour engendrer un signal utile intermédiaire corrigé, et, par traitement non linéaire (103) de ce signal utile intermédiaire corrigé, ledit signal utile à module sensiblement constant, égalisé en échos à phase maximale et en échos à phase minimale, ladite étape d'égalisation par rétroprédiction (100a) et ledit filtrage adaptatif (101) étant réalisés en fonction de l'erreur entre le signal utile à module sensiblement constant et le signal utile intermédiaire corrigé.

**6.** Procédé selon l'une des revendications 1, 2 ou 5, **caractérisé en ce que** ladite étape de traitement non linéaire (103) du signal numérique complexe corrigé respectivement du signal utile intermédiaire corrigé consiste :

- à soumettre l'un des signaux du groupe signal numérique complexe, signal numérique complexe corrigé, signal utile intermédiaire a un processus (1030a) de contrôle automatique de gain ;
- à soumettre ledit signal numérique complexe corrigé respectivement signal utile intermédiaire corrigé à une transformation non linéaire (1030b), dépendante de la fonction coût.

**7.** Procédé selon l'une des revendications 1 à 4, **caractérisé en ce que**, pour un canal de transmission à phase mixte, comportant différentes parties génératrices échos à phase minimale et à phase maximale, ledit proc&de consiste, préalablement à ladite étape (103) consistant à soumettre ledit signal numérique complexe corrigé à un traitement non linéaire pour engendrer ledit signal utile à module sensiblement constant,

- à soumettre ledit signal numérique complexe corrigé à une étape de filtrage transverse (102a) pour engendrer un signal numérique complexe corrigé filtré (f2(n)), et, dans l'étape consistant à soumettre ledit signal numérique complexe corrigé à un traitement non linéaire (103),
- à substituer audit signal numérique complexe corrigé ledit signal numérique complexe corrigé filtré (f2(n)) pour engendrer par traitement non linéaire de ce signal numérique complexe corrigé filtré ledit signal utile à module sensiblement constant égalisé en échos à phase maximale et en échos à phase minimale, ladite étape de filtrage transverse (102a) et ledit filtrage adaptatif (101) appliqué au signal utile à module sensiblement constant étant réalisés en fonction de l'erreur entre le signal numérique complexe corrigé filtré et le signal utile à module sensiblement constant.

**8.** Dispositif égalisation autodidacte d'un canal de transmission de signaux à module sensiblement constant représentatifs d'un signal source et transmis par un canal de transmission générateur de signaux d'échos, **caractérisé en ce que**, en vue d'engendrer un signal utile à module sensiblement constant, ce dispositif comporte au moins :

- des moyens (1) de transformation desdits signaux à module constant transmis en un signal numérique complexe ;
- des moyens (22) d'estimation, pour chaque échantillon de période courante, de l'ensemble des signaux échos en un signal d'écho estimé, par estimation sur au moins la période d'échantillonnage précédant la période échantillonnage courante au moyen d'un filtrage adaptatif appliqué audit signal utile à module sensiblement constant ;
- des moyens (20) de correction du signal numérique complexe en un signal numérique complexe corrigé, par soustraction audit signal numérique complexe dudit signal écho estimé ;
- des moyens (21) de traitement non linéaire recevant ledit signal numérique complexe corrigé et permettant d'engendrer ledit signal utile à module sensiblement constant ;
- des moyens (22) de calcul de l'erreur entre le signal numérique complexe corrigé et ce signal utile à module sensiblement constant et délivrant un signal d'erreur, lesdits moyens d'estimation par filtrage adaptatif appliqué au signal utile à module sensiblement constant étant pilotés par ledit signal d'erreur.

**9.** Dispositif selon la revendication 8, **caractérisé en ce que** ledit filtrage adaptatif est piloté a partir du signal d'erreur obtenu a partir d'un algorithme du gradient d'une fonction de coût, la loi d'adaptation de la fonction de transfert de filtrage adaptatif entre chaque échantillon de période courante de rang n et de période précédente de rang n-1 vérifiant la relation :

$$H(n) = H(n-1) + \delta\lambda e^*(n)\hat{X}_0(n-1)$$

relation dans laquelle

H(n), H(n-1) désignent les coefficients du filtrage adaptatif pour les échantillons de rang n et n-1 respectivement ;
$\delta$ est une valeur réelle positive arbitraire de pas d'adaptation, inférieure à 1 ;
$\lambda$ est une valeur réelle positive arbitraire voisine de 1 par valeur inférieure ;
e*(n) désigne la valeur conjuguée de l'erreur pondérée différence entre le signal numérique complexe corrigé z(n) de rang n et le signal utile à module sensiblement constant $X_0(n-1)$ de rang n-1, erreur pondérée de la forme :

$$e(n) = \lambda [|z(n)| - |\hat{X}_0(n-1)|]e^{j\varphi}$$

$\varphi$ désigne l'argument de phase du signal numérique complexe corrigé z(n).

**10.** Dispositif selon l'une des revendications 8 ou 9, **caractérisé en ce que** lesdits moyens (21) de traitement non linéaire comportent au moins :

- des moyens (210) de conversion de coordonnées cartésiennes en coordonnées polaires recevant ledit signal numérique complexe corrigé et délivrant un signal paramètre de module et un signal paramètre d'argument de phase ;
- des moyens (211) de filtrage passe-bas recevant ledit signal paramètre de module et délivrant un signal à module sensiblement constant ;
- des moyens (213) de conversion coordonnées polaires-coordonnées cartésiennes recevant ledit signal paramètre d'argument de phase et ledit signal à module sensiblement constant et délivrant ledit signal utile à module sensiblement constant.

**11.** Dispositif selon la revendication 8, **caractérisé en ce que**, pour un canal de transmission à phase mixte, comportant différentes parties génératrices d'échos à phase minimale et à phase maximale, ledit dispositif comporte, insérés entre lesdits moyens de transformation desdits signaux à module sensiblement constant transmis en un signal numérique complexe et lesdits moyens de correction de ce signal numérique complexe en un signal numérique complexe corrigé,

- un moyen (R) d'égalisation par rétroprédiction recevant ledit signal numérique complexe et délivrant un signal utile intermédiaire sensiblement égalisé en échos à phase maximale auxdits moyens de correction (20), ledit signal numérique complexe étant remplacé par ledit signal utile intermédiaire, lesdits moyens de correction (20) permettant d'engendrer un signal utile intermédiaire corrigé, et lesdits moyens (21) de traitement non linéaire délivrant ledit signal utile à module sensiblement constant égalisé en échos à phase maximale et en échos à phase minimale, ledit moyen (R) d'égalisation par rétroprédiction et ledit moyen (22) d'estimation par filtrage adaptatif étant pilotés en fonction de l'erreur entre le signal utile à module sensiblement constant et le signal utile intermédiaire corrigé.

**12.** Dispositif selon la revendication 11, **caractérisé en ce que** lesdits moyens (21) de traitement non linéaire recevant ledit signal utile intermédiaire corrigé, délivré par lesdits moyens de correction (20), comprennent au moins :

- un moyen (214) de contrôle automatique de gain recevant ledit signal utile intermédiaire corrigé et délivrant un signal utile intermédiaire corrigé d'amplitude sensiblement constante ;
- un moyen (215) de transformation non linéaire recevant ledit signal utile intermédiaire corrigé d'amplitude sensiblement constante et délivrant ledit signal utile à module sensiblement constant.

**13.** Dispositif selon la revendication 12, **caractérisé en ce que** ledit moyen (214) de contrôle automatique de gain est placé, soit en amont du moyen (R) d'égalisation par rétroprédiction, soit inséré entre le moyen (R) d'égalisation par rétroprédiction et le moyen de correction (20).

**14.** Dispositif selon l'une des revendications 11 à 13, **caractérisé en ce que** ledit moyen (215) de transformation non linéaire consiste en un diviseur du signal délivré par le moyen de correction et le moyen de contrôle automatique de gain respectivement par le module du signal correspondant.

**15.** Dispositif selon l'une des revendications 11 à 14, **caractérisé en ce que** ledit moyen (R) de rétroprédiction comporte au moins :

- un circuit (24) retardateur de L échantillons recevant, soit le signal numérique complexe, soit un signal numérique complexe calibré constituant un signal d'entrée et délivrant un signal d'entrée retardé ;
- un filtre rétroprédicteur (25) recevant ce signal d'entrée et délivrant un signal de rétroprédiction ;
- un module sommateur (26) recevant le signal d'entrée retardé et le signal de rétroprédiction et délivrant ledit signal utile intermédiaire sensiblement égalisé en échos à maximum de phase.

**16.** Dispositif selon la revendication 8, **caractérisé en ce que**, pour un canal de transmission à phase mixte, comportant différentes parties génératrices d'échos à phase minimale et à phase maximale, ledit dispositif comporte, insérés entre lesdits moyens de correction (20) et lesdits moyens de traitement non linéaire (21), des moyens de filtrage transverse (27), recevant ledit signal numérique complexe corrigé et délivrant un signal numérique complexe corrigé filtré, ledit signal numérique complexe corrigé étant remplacé par ledit signal numérique complexe corrigé filtré, pour engendrer, à partir desdits moyens de traitement non linéaire (21), ledit signal utile à module sensiblement constant égalisé en échos à phase maximale et en échos à phase minimale, lesdits moyens de filtrage transverse (27) et lesdits moyens d'estimation (22) par filtrage adaptatif appliqué au signal utile à module sensiblement constant étant pilotés par le signal d'erreur entre le signal numérique complexe corrigé filtré et le signal utile à module sensiblement constant.

**17.** Utilisation du procédé selon l'une des revendications 1 à 7 et du dispositif selon l'une des revendications 8 à 16 d'égalisation autodidacte d'un canal de transmission de signaux radioélectriques, analogiques ou numériques, sonores ou ultra-sonores à module sensiblement constant, ces signaux étant transmis par voie hertzienne, satellitaire, ligne de transmission, milieu sous-marin ou terrestre, pour l'égalisation de canaux de transmission, en présence échos et en présence de signaux interférents respectivement.

**Patentansprüche**

**1.** Verfahren zum autodidaktischen Entzerren des Übertragungskanals für Signale mit im wesentlichen konstantem Absolutwert, die ein Quellsignal darstellen und über einen Echosignale erzeugenden Übertragungskanal übertragen werden,
**dadurch gekennzeichnet, dass** das Verfahren im Hinblick auf das Erzeugen eines Nutzsignals mit im wesentlichen konstantem Absolutwert zumindest besteht aus:

dem Umformen (100) dieser übertragenen Signale mit im wesentlichen konstantem Absolutwert in ein komplexes Digitalsignal,
dem Abschätzen (101) der Gesamtheit der Echosignale für jeden Abtastwert der laufenden Periode durch ein abgeschätztes Echosignal durch Abschätzung über zumindest die der laufenden Abtastperiode vorausgehende Abtastperiode mittels einer adaptiven Filterung, die auf das Nutzsignal mit im wesentlichen konstantem Absolutwert angewendet wird,
dem Korrigieren (102) des komplexen Digitalsignals in ein korrigiertes komplexes Digitalsignal durch Subtrahieren des abgeschätzten Echosignals von dem komplexen Digitalsignal, und
dem Unterwerfen (103) des korrigierten komplexen Digitalsignals einer nichtlinearen Verarbeitung zum Erzeugen des Nutzsignals mit im wesentlichen konstantem Absolutwert,

wobei die auf das Nutzsignal mit im wesentlichen konstantem Absolutwert angewendete adaptive Filterung ausgeführt wird in Abhängigkeit von dem Fehler zwischen dem korrigierten komplexen Digitalsignal und dem Nutzsignal mit im wesentlichen konstantem Absolutwert.

**2.** Verfahren nach Anspruch 1, **dadurch gekennzeichnet, dass** die adaptive Filterung (101) verwirklicht wird nach dem Kriterium der Minimierung (104) einer Kostenfunktion des Typs

$$J_{p,q,r}(n) = E\left[\left|\left\|z(n)\right\|^{p} - \left|\hat{X}_{o}(n)\right|^{r}\right|^{q}\right]$$

für jeden Abtastwert des Rangs n, wobei in dieser Beziehung

E den mathematischen Erwartungswert einer Abweichungsfunktion der Absolutwerte des korrigierten komplexen Digitalsignals und des Nutzsignals mit im wesentlichen konstantem Absolutwert bezeichnet,

p,q,r positive ganze Zahlen sind,

z(n) das korrigierte komplexe Digitalsignal bezeichnet und

$X_o(n)$ das Nutzsignal mit im wesentlichen konstantem Absolutwert bezeichnet.

3. Verfahren nach Anspruch 2, **dadurch gekennzeichnet, dass** der Vorgang der Adaption der adaptiven Filterung durchgeführt wird ausgehend von einem Algorithmus des Gradienten der Kostenfunktion, wobei das Gesetz der Adaption der Übertragungsfunktion der adaptiven Filterung zwischen jedem Abtastwert der laufenden Periode vom Rang n und der vorangegangenen Periode vom Rang n-1 die Beziehung

$$H(n) = H(n-1) + \delta\lambda e^{*}(n)\hat{X}_{0}(n-1)$$

erfüllt, wobei in dieser Beziehung

H(n), H(n-1) jeweils die Koeffizienten der adaptiven Filterung für die Abtastwerte vom Rang n bzw. n-1 bezeichnen,

δ ein beliebiger positiver reeller Wert des Adaptionsschritts kleiner 1 ist,

λ ein beliebiger positiver reeller Wert benachbart zu 1 mit einem niedrigeren Wert ist,

e*(n) den konjugierten Wert des gewichteten Differenzfehlers zwischen dem korrigierten komplexen Digitalsignal z(n) vom Rang n und dem Nutzsignal mit im wesentlichen konstantem Absolutwert $X_0(n$-1) vom Rang n-1 bezeichnet, der gewichtete Fehler der Form: $e(n) = \lambda[|z(n)| - |X_0(n$-1)$|]e^{j\varphi}$, und

φ das Argument der Phase des korrigierten komplexen Digitalsignals z(n) bezeichnet.

4. Verfahren nach einem der Ansprüche 1 bis 3, **dadurch gekennzeichnet, dass** der Schritt (103) der nichtlinearen Verarbeitung des korrigierten komplexen Digitalsignals zum Erzeugen des Nutzsignals mit im wesentlichen konstantem Absolutwert für jeden aufeinanderfolgenden Abtastwert vom Rang (n) der laufenden Periode besteht aus:

dem Auftrennen (1030) des korrigierten komplexen Digitalsignals jeweils in ein Signal, das den Absolutwert |z(n)| bzw. die Phase φ des korrigierten komplexen Digitalsignals darstellt,

dem Unterwerfen (1031) des den Absolutwert |z(n)| des korrigierten komplexen Digitalsignals darstellenden Signals einer Filterung vom Tiefpasstyp zum Liefern eines Signals mit im wesentlichen konstantem Absolutwert m(n), und

dem Unterwerfen des Signals mit im wesentlichen konstantem Absolutwert m(n) und des die Phase φ des korrigierten komplexen Digitalsignals darstellenden Signals einem Rekonstruktionsverfahren (1032) zum Erzeugen des Nutzsignals mit im wesentlichen konstantem Absolutwert.

5. Verfahren nach Anspruch 1 oder 2, **dadurch gekennzeichnet, dass** für einen Übertragungskanal mit gemischter Phase, der verschiedene Erzeugungsabschnitte für Echos mit minimaler Phase und maximaler Phase enthält, das Verfahren nachfolgend auf den aus dem Umformen der übertragenen Signale mit im wesentlichen konstantem Absolutwert in ein komplexes Digitalsignal bestehenden Schritt und vor dem Schritt des Abschätzens besteht aus:

dem Unterwerfen (100a) des komplexen Digitalsignals einem Schritt des Entzerrens durch Retroprediktion zum Erzeugen eines Zwischennutzsignals ey(n), das im Wesentlichen von Echos maximaler Phase entzerrt ist, und

dem Ersetzen des komplexen Digitalsignals durch das Zwischennutzsignal ey(n) in dem aus dem Korrigieren des komplexen Digitalsignals bestehenden Schritt (102) zum Erzeugen eines korrigierten Zwischennutzsignals, und

durch nichtlineare Verarbeitung (103) des korrigierten Zwischennutzsignals, das Nutzsignal mit im wesentlichen konstantem Absolutwert, das von Echos maximaler Phase und von Echos minimaler Phase entzerrt ist,

wobei der Schritt des Entzerrens durch Retroprediktion (100a) und die adaptive Filterung (101) ausgeführt werden in Abhängigkeit von dem Fehler zwischen dem Nutzsignal mit im wesentlichen konstantem Absolutwert und dem korrigierten Zwischennutzsignal.

**6.** Verfahren nach Anspruch 1, 2 oder 5, **dadurch gekennzeichnet, dass** der Schritt der nichtlinearen Verarbeitung (103) des korrigierten komplexen Digitalsignals bzw. des korrigierten Zwischennutzsignals besteht aus:

dem Unterwerfen eines der Signale aus der Gruppe komplexes Digitalsignal, korrigiertes komplexes Digitalsignal, Zwischennutzsignal einem Vorgang (1030a) der automatischen Verstärkungsregelung und
dem Unterwerfen des korrigierten komplexen Digitalsignals bzw. des korrigierten Zwischennutzsignals einer nichtlinearen Umformung (1030b) in Abhängigkeit von der Kostenfunktion.

**7.** Verfahren nach einem der Ansprüche 1 bis 4, **dadurch gekennzeichnet, dass** für einen Übertragungskanal mit gemischter Phase, der verschiedene Erzeugungsabschnitte für Echos mit minimaler Phase und maximaler Phase enthält, das Verfahren vor dem aus dem Unterwerfen des korrigierten komplexen Digitalsignals einer nichtlinearen Verarbeitung zum Erzeugen des Nutzsignals mit im wesentlichen konstantem Absolutwert bestehenden Schritt (103) besteht aus:

dem Unterwerfen des korrigierten komplexen Digitalsignals einem Schritt der transversen Filterung (102a) zum Erzeugen eines gefilterten korrigierten komplexen Digitalsignals (f2(n)), und
dem Ersetzen des korrigierten komplexen Digitalsignals durch das gefilterte korrigierte komplexe Digitalsignal (f2(n)) in dem aus dem Unterwerfen des korrigierten komplexen Digitalsignals einer nichtlinearen Verarbeitung bestehenden Schritt (103) zum Erzeugen des Nutzsignals mit im wesentlichen konstantem Absolutwert, das von Echos maximaler Phase und von Echos minimaler Phase entzerrt ist, durch nichtlineare Verarbeitung des gefilterten korrigierten komplexen Digitalsignals,

wobei der Schritt der transversen Filterung (102a) und die auf das Nutzsignal mit im wesentlichen konstantem Absolutwert angewandte adaptive Filterung (101) ausgeführt werden in Abhängigkeit von dem Fehler zwischen dem gefilterten korrigierten komplexen Digitalsignal und dem Nutzsignal mit im wesentlichen konstantem Absolutwert.

**8.** Vorrichtung zum autodidaktischen Entzerren eines Übertragungskanals für Signale mit im wesentlichen konstantem Absolutwert, die ein Quellsignal darstellen und über einen Echosignale erzeugenden Übertragungskanal übertragen werden,
**dadurch gekennzeichnet, dass** die Vorrichtung im Hinblick auf das Erzeugen eines Nutzsignals mit im wesentlichen konstantem Absolutwert zumindest enthält:

ein Mittel (1) zum Umformen der übertragenen Signale mit im wesentlichen konstantem Absolutwert in ein komplexes Digitalsignal,
ein Mittel (22) zum Abschätzen der Gesamtheit der Echosignale für jeden Abtastwert der laufenden Periode durch ein abgeschätztes Echosignal durch Abschätzung über zumindest die der laufenden Abtastperiode vorausgehende Abtastperiode mittels einer adaptiven Filterung, die auf das Nutzsignal mit im wesentlichen konstantem Absolutwert angewendet wird,
ein Mittel (20) zum Korrigieren des komplexen Digitalsignals in ein korrigiertes komplexes Digitalsignal durch Subtrahieren des abgeschätzten Echosignals von dem komplexen Digitalsignal,
ein Mittel (21) zur nichtlinearen Verarbeitung, das das korrigierte komplexe Digitalsignal empfängt und das Erzeugen des Nutzsignals mit im wesentlichen konstantem Absolutwert ermöglicht, und
ein Mittel (22) zum Berechnen des Fehlers zwischen dem korrigierten komplexen Digitalsignal und dem Nutzsignal mit im wesentlichen konstantem Absolutwert, das ein Fehlersignal liefert,

wobei das Mittel zur Abschätzung durch auf das Nutzsignal mit im wesentlichen konstantem Absolutwert angewendete adaptive Filterung von dem Fehlersignal gesteuert wird.

**9.** Vorrichtung nach Anspruch 8, **dadurch gekennzeichnet, dass** die adaptive Filterung gesteuert wird ausgehend von einem Fehlersignal, das ausgehend von einem Algorithmus des Gradienten der Kostenfunktion gewonnen wird, wobei das Gesetz der Adaption der Übertragungsfunktion der adaptiven Filterung zwischen jedem Abtastwert der laufenden Periode vom Rang n und der vorangegangenen Periode vom Rang n-1 die Beziehung

$$H(n) = H(n-1) + \delta\lambda e^*(n)\hat{X}_0(n-1)$$

erfüllt, wobei in dieser Beziehung

H(n), H(n-1) jeweils die Koeffizienten der adaptiven Filterung für die Abtastwerte vom Rang n bzw. n-1 bezeichnen,

$\delta$ ein beliebiger positiver reeller Wert des Adaptionsschritts kleiner 1 ist,

$\lambda$ ein beliebiger positiver reeller Wert benachbart zu 1 mit einem niedrigeren Wert ist,

e*(n) den konjugierten Wert des gewichteten Differenzfehlers zwischen dem korrigierten komplexen Digitalsignal z(n) vom Rang n und dem Nutzsignal mit im wesentlichen konstantem Absolutwert $X_0(n-1)$ vom Rang n-1 bezeichnet, der gewichtete Fehler der Form: $e(n) = \lambda[|z(n)|-|X_0(n-1)|]e^{j\varphi}$, und

$\varphi$ das Argument der Phase des korrigierten komplexen Digitalsignals z(n) bezeichnet.

**10.** Vorrichtung nach Anspruch 8 oder 9, **dadurch gekennzeichnet, dass** das Mittel (21) zur nichtlinearen Verarbeitung zumindest enthält:

ein Mittel (210) zum Umwandeln von kartesischen Koordinaten in Polarkoordinaten, das das korrigierte komplexe Digitalsignal empfängt und ein Parametersignal des Absolutwerts und ein Parametersignal des Arguments der Phase liefert,

ein Mittel (211) zum Tiefpassfiltern, das das Parametersignal des Absolutwerts empfängt und ein Signal mit im wesentlichen konstantem Absolutwert liefert, und

ein Mittel (213) zum Umwandeln von Polarkoordinaten in kartesische Koordinaten, das das Parametersignal des Arguments der Phase und das Signal mit im wesentlichen konstantem Absolutwert empfängt und das Nutzsignal mit im wesentlichen konstantem Absolutwert liefert.

**11.** Vorrichtung nach Anspruch 8, **dadurch gekennzeichnet, dass**

für einen Übertragungskanal mit gemischter Phase, der verschiedene Erzeugungsabschnitte für Echos mit minimaler Phase und maximaler Phase enthält, die Vorrichtung eingefügt zwischen dem Mittel zum Umformen der übertragenen Signale mit im wesentlichen konstantem Absolutwert in ein komplexes Digitalsignal und dem Mittel zum Korrigieren des komplexen Digitalsignals in ein korrigiertes komplexes Digitalsignal ein Mittel (R) zum Entzerren durch Retroprediktion enthält, das das komplexe Digitalsignal empfängt und ein Zwischennutzsignal, das im Wesentlichen von Echos maximaler Phase entzerrt ist, an das Mittel (20) zum Korrigieren liefert,

wobei das komplexe Digitalsignal durch das Zwischennutzsignal ersetzt wird,

das Mittel (20) zum Korrigieren es ermöglicht, ein korrigiertes Zwischennutzsignal zu erzeugen,

das Mittel (21) zur nichtlinearen Verarbeitung das Nutzsignal mit im wesentlichen konstantem Absolutwert, das von Echos maximaler Phase und von Echos minimaler Phase entzerrt ist, liefert, und

das Mittel (R) zum Entzerren durch Retroprediktion und Mittel (22) zum Abschätzen durch adaptive Filterung (101) gesteuert werden in Abhängigkeit von dem Fehler zwischen dem Nutzsignal mit im wesentlichen konstantem Absolutwert und dem korrigierten Zwischennutzsignal.

**12.** Vorrichtung nach Anspruch 11, **dadurch gekennzeichnet, dass** das Mittel (21) zur nichtlinearen Verarbeitung, das das korrigierte Zwischennutzsignal empfängt, enthält:

ein Mittel (214) zur automatischen Verstärkungsregelung, das das korrigierte Zwischennutzsignal empfängt und ein korrigiertes Zwischennutzsignal mit im Wesentlichen konstanter Amplitude liefert, und

ein Mittel (215) zur nichtlinearen Umformung, die das korrigierte Zwischennutzsignal mit im Wesentlichen konstanter Amplitude empfängt und das Nutzsignal mit im Wesentlichen konstantem Absolutwert liefert.

**13.** Vorrichtung nach Anspruch 12, **dadurch gekennzeichnet, dass** das Mittel (214) zur automatischen Verstärkungsregelung vor dem Mittel (R) zum Entzerren durch Retroprediktion oder zwischen dem Mittel (R) zum Entzerren durch Retroprediktion und dem Mittel (20) zum Korrigieren eingefügt ist.

**14.** Vorrichtung nach einem der Ansprüche 11 bis 13, **dadurch gekennzeichnet, dass** das Mittel (215) zur nichtlinearen Umformung aus einem Dividierer des von dem Mittel zum Korrigieren und dem Mittel zur automatischen Verstärkungsregelung gelieferten Signals jeweils durch den Absolutwert des entsprechenden Signals besteht.

**15.** Vorrichtung nach einem der Ansprüche 11 bis 14, **dadurch gekennzeichnet, dass** das Mittel (R) zur Retroprediktion zumindest enthält:

eine Verzögerungsschaltung (24) von L Abtastwerten, die entweder das komplexe Digitalsignal oder ein kalibriertes komplexes Digitalsignal empfängt, das ein Eingangssignal bildet, und ein verzögertes Eingangssignal ausgibt,

ein Retroprediktionsfilter (25), das dieses Eingangssignal empfängt und ein Retroprediktionssignal liefert, und

ein Summiermodul (26), das das verzögerte Eingangssignal und das Retroprediktionssignal empfängt und das Zwischennutzsignal liefert, das im Wesentlichen von Echos maximaler Phase entzerrt ist.

**16.** Vorrichtung nach Anspruch 8, **dadurch gekennzeichnet, dass**

für einen Übertragungskanal mit gemischter Phase, der verschiedene Erzeugungsabschnitte für Echos mit minimaler Phase und maximaler Phase enthält, die Vorrichtung eingefügt zwischen dem Mittel (20) zum Korrigieren und dem Mittel (21) zur nichtlinearen Verarbeitung ein Mittel (27) zur transversen Filterung enthält, das das korrigierte komplexe Digitalsignal empfängt und ein gefiltertes korrigiertes komplexes Digitalsignal liefert,

wobei das korrigierte komplexe Digitalsignal durch das gefilterte korrigierte komplexe Digitalsignal ersetzt wird zum Erzeugen des Nutzsignals mit im wesentlichen konstantem Absolutwert, das von Echos maximaler Phase und von Echos minimaler Phase entzerrt ist, von dem Mittel (21) zur nichtlinearen Verarbeitung aus, und

das Mittel (27) zur transversen Filterung und das Mittel (22) zum Abschätzen durch auf das Nutzsignal mit im wesentlichen konstantem Absolutwert angewandte adaptive Filterung gesteuert werden durch das Fehlersignal zwischen dem gefilterten korrigierten komplexen Digitalsignal und dem Nutzsignal mit im wesentlichen konstantem Absolutwert.

**17.** Verwendung des Verfahrens nach einem der Ansprüche 1 bis 7 und der Vorrichtung nach einem der Ansprüche 8 bis 16 des autodidaktischen Entzerrens eines Übertragungskanals für analoge oder digitale radioelektrische, Schall- oder UltraschallSignale mit im wesentlichen konstantem Absolutwert, wobei die Signale auf dem Funkweg, über Satellit, über eine Übertragungsleitung, in Unterwasser- oder terrestrischer Umgebung übertragen werden, für die Entzerrung von Übertragungskanälen jeweils bei Vorhandensein von Echos und bei Vorhandensein von überlagerten Signalen.

## Claims

**1.** Process for blind equalization of the transmission channel of signals of substantially constant modulus representative of a source signal and transmitted by a transmission channel generating echo signals, **characterised by** the fact that this process at least consists, in order to produce a useful signal of substantially constant modulus:

- of transforming (100) the said signals of substantially constant modulus transmitted into a complex digital signal;
- of estimating (101) for each current sampling period all the said echo signals to give an estimated echo signal, by estimation over at least the sampling period preceding the current sampling period by means of adaptive filtering applied to the said useful signal of substantially constant modulus;
- of correcting (102) the said complex digital signal to give a corrected complex digital signal, by subtraction from the said complex digital signal of the said estimated echo signal;
- of subjecting (103) the said corrected complex digital signal to non-linear processing to produce the said useful signal of substantially constant modulus, the said adaptive filtering applied to the said useful signal of substantially constant modulus being effected as a function of the error between the said corrected complex digital signal and the said useful signal of substantially constant modulus.

**2.** Process as described in claim 1, **characterised by** the fact that the said adaptive filtering (101) is effected on a criterion of minimisation (104) for each sample of rank n of a cost function of the type:

$$ J_{p,q,r}(n) = E[||z(n)|^p - |\hat{x_c}(n)|^r|^q] $$

in which relationship

E represents the expectation of a deviation function of the moduli of the corrected complex signal and of the useful signal of substantially constant modulus;

p,q,r are positive whole numbers;

$\check{z}$(n) designates the corrected complex digital signal;
$x_0(n)$ designates the useful signal of substantially constant modulus.

3. Process as described in claim 2, **characterised by** the fact that the adaptation process of the said adaptive filtering being effected from an algorithm of the gradient of the said cost function, the adaptation law of the adaptive filtering transfer function between each sample of current period of rank n and of previous period of rank n-1 verifies the relationship:

$$H(n) = H(n-1) + \delta\lambda e*(n)\hat{x}_0(n-1)$$

in which relationship

H(n), H(n-1) designate the adaptive filtering coefficients for the samples of rank n and n-1 respectively;
$\delta$ is an arbitrary positive real adaptation step step value, less than 1;
$\lambda$ is an arbitrary positive real value close to and lower than 1;
e*(n) designates the conjugate value of the weighted error difference between the corrected complex digital signal $\check{z}$(n) of rank n and the useful signal of substantially constant modulus $x_0(n$-1) of rank n-1, which weighted error is of the form:

$$e(n) = \lambda[|z(n)| - |\hat{x}_0(n-1)|]e^{j\varphi}$$

$\varphi$ designates the phase argument of the corrected complex digital signal z(n).

4. Process as described in one of claims 1 to 3, **characterised by** the fact that the said step (103) of non-linear processing of the corrected complex digital signal to produce the said useful signal of substantially constant modulus consists, for each successive current period sample of rank (n):

- of separating (1030) the said corrected complex digital signal into a signal representative of the modulus |z(n)| and of the phase $\varphi$ respectively of the corrected complex digital signal;
- of subjecting (1031) the said signal representative of the modulus |z(n)| of the corrected complex digital signal to filtering of low-pass type to produce a signal of substantially constant modulus m(n);
- of subjecting the said signal of substantially constant modulus m(n) and the said signal representative of the phase $\varphi$ of the said corrected complex digital signal to a reconstruction process (1032) to produce the said useful signal of substantially constant modulus.

5. Process as described in one of claims 1 or 2, **characterised by** the fact that, for a mixed phase transmission channel, including different parts generating minimum phase and maximum phase echoes, the said process consists, following the step consisting of transforming the said signals of constant modulus transmitted into a complex digital signal and prior to the said estimation step:

- of subjecting (100a) the said complex digital signal to a step of equalization by retroprediction, to produce an intermediate useful signal ey(n) substantially equalized for maximum phase echoes, and, in the step (102) consisting of correcting the said complex digital signal,
- of substituting the said intermediate useful signal ey(n) for the said complex digital signal to produce a corrected intermediate useful signal and, by non-linear processing (103) of this corrected intermediate useful signal, the said useful signal of substantially constant modulus, equalized for maximum phase echoes and for minimum phase echoes, the said step of equalization by retroprediction (100a) and the said adaptive filtering (101) being effected as a function of the error between the useful signal of substantially constant modulus and the corrected intermediate useful signal.

6. Process as described in one of claims 1, 2, or 5, **characterised by** the fact that the said step of non-linear processing (103) of the corrected complex digital signal and of the corrected intermediate useful signal respectively consists:

- of subjecting one of the signals of the group complex digital signal, corrected complex digital signal and intermediate useful signal to a process (1030a) of automatic gain control;
- of subjecting the said corrected complex digital signal and corrected intermediate useful signal respectively to non-linear transformation (1030b) dependent on the cost function.

7. Process as described in one of claims 1 to 4, **characterised by** the fact that, for a mixed phase transmission channel, including different parts generating minimum phase and maximum phase echoes, the said process consists, prior to the said step (103) consisting of subjecting the said corrected complex digital signal to non-linear processing to produce the said useful signal of substantially constant modulus,

- of subjecting the said corrected complex digital signal to a step of transverse filtering (102a) to produce a filtered corrected complex digital signal (f2(n)), and, in the step consisting of subjecting the said corrected complex digital signal to non-linear processing (103),
- of substituting the said filtered corrected complex digital signal (f2(n)) for the said corrected complex digital signal to produce by non-linear processing of this filtered corrected complex digital signal the said useful signal of substantially constant modulus equalized for maximum phase echoes and for minimum phase echoes, the said step of transverse filtering (102a) and the said adaptive filtering (101) applied to the useful signal of substantially constant modulus being effected as a function of the error between the filtered corrected complex digital signal and the useful signal of substantially constant modulus.

8. Device for blind equalization of a channel for transmission of signals of substantially constant modulus representative of a source signal and transmitted by a transmission channel generating echo signals, **characterised by** the fact that, in order to produce a useful signal of substantially constant modulus, this device includes at least:

- means (1) for transformation of the said signals of constant modulus transmitted into a complex digital signal;
- means (22) for estimation, for each sample of current period, of all the echo signals to give an estimated echo signal, by estimation over at least the sampling period preceding the current sampling period by means of adaptive filtering applied to the said useful signal of substantially constant modulus;
- means (20) for correction of the complex digital signal to give a corrected complex digital signal, by subtraction of the said estimated echo signal from the said complex digital signal;
- means (21) for non-linear processing receiving the said corrected complex digital signal and permitting production of the said useful signal of substantially constant modulus;
- means (22) for calculation of the error between the corrected complex digital signal and this useful signal of substantially constant modulus and producing an error signal, the said means for estimation by adaptive filtering applied to the useful signal of substantially constant modulus being controlled by the said error signal.

9. Device as described in claim 8, **characterised by** the fact that the said adaptive filtering is controlled from the error signal obtained from an algorithm of the gradient of a cost function, the law of adaptation of the adaptive filtering transfer function between each sample of current period of rank n and of preceding period of rank n-1 verifying the relationship:

$$H(n) = H(n-1) + \delta \lambda e^*(n) \hat{x}_0(n-1)$$

in which relationship

H(n), H(n-1) designate the adaptive filtering coefficients for the samples of rank n and n-1 respectively;
$\delta$ is an arbitrary positive real adaptation step value, less than 1;
$\lambda$ is an arbitrary positive real value close to and lower than 1;
$e^*(n)$ designates the conjugate value of the weighted error difference between the corrected complex digital signal z(n) of rank n and the useful signal of substantially constant modulus $\hat{x}_0(n\text{-}1)$ of rank n-1, which weighted error is of the form:

$$e(n) = \lambda[\,|\,z(n)\,|\, - \,|\,\hat{x}_0(n-1)\,|\,]e^{j\varphi}$$

φ designates the phase argument of the corrected complex digital signal z(n).

**10.** Device as described in one of claims 8 or 9, **characterised by** the fact that the said means (21) for non-linear processing include at least:

- means (210) for conversion of cartesian co-ordinates into polar co-ordinates receiving the said corrected complex digital signal and producing a modulus parameter signal and a phase argument parameter signal;
- low pass filtering means (211) receiving the said modulus parameter signal and producing a signal of substantially constant modulus;
- means (213) for polar co-ordinate - cartesian co-ordinate conversion receiving the said phase argument parameter signal and the said signal of substantially constant modulus and producing the said useful signal of substantially constant modulus.

**11.** Device as described in claim 8, **characterised by** the fact that, for a mixed phase transmission channel, including different parts generating minimum phase and maximum phase echoes, the said device includes, inserted between the said means for transformation of the said signals of substantially constant modulus transmitted into a complex digital signal and the said means for correction of this complex digital signal to give a corrected complex digital signal,

- a means (R) for equalization by retroprediction receiving the said complex digital signal and producing an intermediate useful signal substantially equalized for maximum phase echoes in the said correction means (20), the said complex digital signal being replaced by the said intermediate useful signal, the said correction means (20) permitting production of a corrected intermediate useful signal, and the said non-linear processing means (21) producing the said useful signal of substantially constant modulus equalized for maximum phase echoes and for minimum phase echoes, the said means (R) for equalization by retroprediction and the said means (22) for estimation by adaptive filtering being controlled as a function of the error between the useful signal of substantially constant modulus and the corrected intermediate useful signal.

**12.** Device as described in claim 11, **characterised by** the fact that the said means (21) for non-linear processing receiving the said corrected intermediate useful signal, produced by the said correction means (20), comprise at least:

- a means (214) for automatic gain control receiving the said corrected intermediate useful signal and producing a corrected intermediate useful signal of substantially constant amplitude;
- a means (215) for non-linear transformation receiving the said corrected intermediate useful signal of substantially constant amplitude and producing the said useful signal of substantially constant modulus.

**13.** Device as described in claim 12, **characterised by** the fact that the said means (214) for automatic gain control is positioned either upstream of the means (R) for equalization by retroprediction, or inserted between the means (R) for equalization by retroprediction and the correction means (20).

**14.** Device as described in one of claims 11 to 13, **characterised by** the fact that the said means (215) for non-linear transformation consists of a divider of the signal produced by the correction means and the means for automatic gain control respectively by the modulus of the corresponding signal.

**15.** Device as described in one of claims 11 to 14, **characterised by** the fact that the said means (R) for retroprediction include at least:

- an L-sample delay circuit (24) receiving either the complex digital signal or a calibrated complex digital signal forming an input signal and producing a delayed input signal;
- a retropredictive filter (25) receiving this input signal and producing a retroprediction signal;
- a summing module (26) receiving the delayed input signal and the retroprediction signal and producing the said intermediate useful signal substantially equalized for maximum phase echoes.

**16.** Device as described in claim 8, **characterised by** the fact that, for a mixed phase transmission channel, including different parts generating minimum phase and maximum phase echoes, the said device includes, inserted between the said correction means (20) and the said non-linear processing means (21), transverse filtering means (27), receiving the said corrected complex digital signal and producing a filtered corrected complex digital signal, the said corrected complex digital signal being replaced by the said filtered corrected complex digital signal, to produce, from the said non-linear processing means (21), the said useful signal of substantially constant modulus equalized for maximum phase echoes and for minimum phase echoes, the said transverse filtering means (27) and the said means for estimation (22) by adaptive filtering applied to the useful signal of substantially constant modulus being controlled by the error signal between the filtered corrected complex digital signal and the useful signal of substantially constant modulus.

17. Use of the process as described in one of claims 1 to 7 and of the device as described in one of claims 8 to 16 for blind equalization of a channel for transmission of radioelectric, analogue or digital, sonic or ultrasonic signals of substantially constant modulus, these signals being transmitted by Hertzian means, satellite, transmission line, under-water or terrestrial medium, for the equalization of transmission channels, in the presence of echoes and in the presence of interference signals respectively.

FIG.1a. ÉGALISEUR AUTODIDACTE DE BUSSGANG
(ART ANTÉRIEUR)

FIG.1b. ZONE CRITIQUE DE L'ESPACE EN z
(ART ANTÉRIEUR)

FIG.2a.

smct

100
TRANSFORMATION EN
SIGNAL NUMÉRIQUE COMPLEXE

$y(n)$

102
CORRECTION
$z(n) = y(n) - \tilde{X1}(n)$

101
ESTIMATION DE
L'ENSEMBLE DES ÉCHOS
FILTRAGE ADAPTATIF

$\tilde{X1}(n)$

$z(n)$

103
TRAITEMENT NON LINÉAIRE

$\hat{X0}(n)$

$\hat{X0}(n)$

104
CALCUL D'ERREUR
$Jp,q,r(n) = E\left[||z(n)|^p - |\hat{X_0}(n)|^r|^q\right]$
$e(n) = \lambda\left[|z(n)| - |\hat{X_0}(n-1)|\right]e^{j\varphi}$

$e(n)$

---

$z(n)$

103

1030
$z(n) = |z(n)| e^{j\varphi}$

$|z(n)|$    $\varphi$

1031
FILTRAGE PASSE BAS

FIG.2b

$m(n)$    $\varphi$

1032
$\hat{X0}(n) = m(n) e^{j\varphi}$

$\hat{X0}(n)$

FIG.3a.

CORRECTION
$z(n)=ey(n)-\tilde{X1}(n)$

CALCUL D'ERREUR
$J_{p,q,r}(n)=E\left[\left[|z(n)|^{p}-|\hat{X_0}(n)|^{r}\right]^{q}\right]$
$e(n)=z(n)-g(z(n))$

TRANSFORMATION NON
LINÉAIRE $g(z)=\dfrac{z'(n)}{|z'(n)|}$

FIG.3b.

FIG.4

FIG.5a.

EP 0 860 963 B1

FIG.5b.

FIG.6a.

FIG.6b.

FIG.6c.

FIG.7a.
(ART ANTÉRIEUR)

FIG.7b.

FIG.7c.